# EUROPEAN PATENT SPECIFICATION

(11) **EP 3 202 248 B1**
(45) Date of publication and mention of the grant of the patent: **31.07.2019**
(21) Application number: 17153721.0
(22) Date of filing: 30.01.2017
(51) Int. Cl.: A01D 90/02, A01D 90/12

(54) **AGRICULTURAL VEHICLE WITH A LOADING CHAMBER AND STORING METHOD WITH A CROP MATERIAL PROPERTY SENSOR**
LANDWIRTSCHAFTLICHES FAHRZEUG MIT EINER LADEKAMMER UND LAGERUNGSVERFAHREN MIT EINEM ERNTEGUTEIGENSCHAFTSSENSOR
VÉHICULE AGRICOLE AYANT UNE CHAMBRE DE CHARGEMENT ET PROCÉDÉ DE STOCKAGE AU MOYEN D'UN CAPTEUR DE PROPRIÉTÉ DE MATÉRIAU RÉCOLTÉ

(30) Priority: 03.02.2016 NL 2016211
(43) Date of publication of application: 09.08.2017
(73) Proprietor: Forage Innovations B.V., 3147 PB Maassluis (NL)
(72) Inventor: DREIER, Thomas, 3147 PB Maassluis (NL); HAM, Jelmer Arnoldus, 3147 PB Maassluis (NL)
(74) Representative: AGCO Intellectual Property Department

(56) References cited:
- EP-A1- 2 545 763
- EP-A1- 2 732 692
- EP-A2- 2 614 703
- DE-A1-102015 104 390
- DE-B3-102014 107 178
- US-A1- 2013 319 263

## Description

### FIELD OF THE INVENTION

The invention refers to an agricultural vehicle with a loading chamber for crop material and to a method for storing crop material in the loading chamber of an agricultural vehicle, in particular to a loader wagon with a pick-up unit, a feeding channel, and a loading chamber.

### BACKGROUND OF THE INVENTION

Several kinds of agricultural vehicles are known which are moved over an agricultural field, pick up or otherwise receive loose crop material from the ground, and injects the received crop material into a processing or storing chamber. It is desired that as much crop material as possible is stored in the chamber without overloading the vehicle and without damaging the crop material by compressing it too much. Several approaches how to solve this task have been proposed.

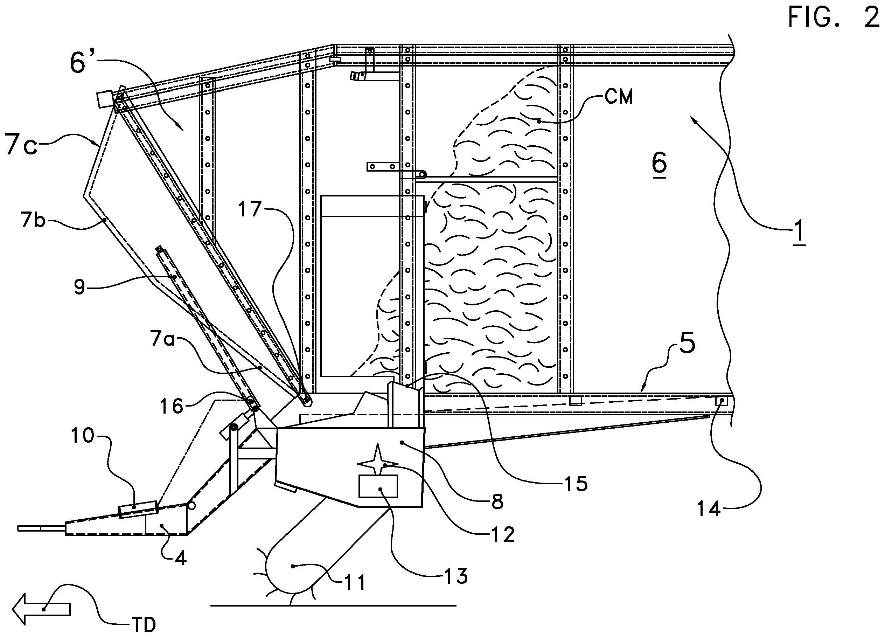

EP 2545763 A1 discloses a loader wagon (Ladewagen) with a pivotal front wall (schwenkbare Stirnwand 7), side walls 6, and a rear wall. A hydraulic cylinder 9 can pivot the front wall 7 about a horizontal axis near the inlet into the loading chamber. When the cylinder 9 is fully retracted, the front wall 7 is fully pivoted towards the pulling tractor 3 and the provided loading chamber has the maximal possible volume, cf. Fig. 2. Expanding the cylinder 9 causes the front wall 7 to pivot away from the tractor 3 and into an unloading position (Entladeposition) cf. Fig. 3. A vertical load sensor (Stützlastsensor 5) measures a vertical load and is mounted at the towing unit (Deichsel 4) or at an actuator (Knickzylinder) for the towing unit 4. The pivotal position of the front wall 7 depends on the measured vertical load. The driver of the tractor 3 can select whether the front wall 7 may be pivoted to the foremost position 7c (maximal possible chamber volume) or only to an intermediate position between the positions 7a and 7b. The loader wagon can be adapted to a movement over good or over poor streets or to dry or wet crop material, cf. pars. [0013] and [0014].

Fig. 1 of EP 2732692 A1 shows the front segment of a loader wagon (Ladewagen 1) with a loading chamber (Laderaum 6). A conveying rotor (Förderrotor 8) conveys picked-up crop material through a feeding channel 8 into the loading chamber 6. The front wall (vordere Stirnwand 7) of the loading chamber 6 can be pivoted around a horizontal axis which is situated near the rear end of the feeding channel (Förderkanal 8) which guides into the loading chamber 6. A bottom conveyor (Kratzboden 5) conveys the crop material in the loading chamber 6 away from the feeding channel 8.

The crop material in the loading chamber 6 of EP 2732692 A1 applies a force F onto the front wall 7. For increasing the storing capacity of the loading chamber 6, a hydraulic cylinder 9 pivots the front wall 7 away from the rear wall and towards a pulling tractor. A pressure sensor (Drucksensor 9a) measures the force which the crop material in the loading chamber 6 applies onto the front wall 7. A control unit 10 generates control inputs for the hydraulic cylinder 9 depending on signals from the pressure sensor 9a. In addition or as an alternative approach the control unit 10 generates control inputs for the bottom conveyor 5 depending on signals from the pressure sensor 9a. In one embodiment the control unit 10 activates the hydraulic cylinder 9 for the front wall 7 or for the bottom conveyor 5 if the measured pressure exceeds a given threshold.

DE 102006039672 B4 discloses a loader wagon (Lade- und Häckselwagen 1). The wagon 1 can be loaded with crop material selectively in two ways - either by a pick-up unit and a subsequent conveying rotor engaging into a feeding channel or by transferring the crop material directly from above into the loading chamber (Laderaum 6). For transferring crop material directly into the loading chamber the upper part of the front wall (vordere Laderaumwand 10) can be removed in order to provide an aperture. The front wall 10 of the loading chamber 6 comprises several parts. A base part (Basisteil 13) is rigidly connected with the lateral loading chamber walls (Seitenwände 8 und 9), cf. Fig. 2 to Fig. 4. A first flap (erstes Klappteil 14) can be pivoted around a horizontal traversal axis (liegende Querachse 15) with respect to the base part 13. A second flap (zweites Klappteil 16) can be pivoted around a further traversal axis 17 with respect to the first flap 14. The second flap 16 can be placed onto the first flap 14, cf. Fig. 4. A first hydraulic cylinder 20 can pivot the first flap 14. A second hydraulic cylinder 21 can pivot the second flap 16, cf. Fig. 2, Fig. 3, and Fig. 4. A controller 24 generates control inputs for the cylinder 20 and 21. The second flap 16 can be moved even if the loading chamber (Laderaum 6) is closed, cf. par. [0034]. The expanding pressure of the crop material in the loading chamber 6 tends to pivot the second flap 16. A movement sensor (Bewegungssensor 29) measures the current position or movement of the second flap 16 and thereby measures a value indicative of the pressure which the crop material applies onto the chamber wall. The controller 24 processes signals from the movement sensor 29 and generates control inputs for a scraper floor controller (Kratzboden-Steuereinheit 31). The control unit 31 controls the scraper floor (Kratzboden) in the interior of the loading chamber 6. If a large pivotal movement of the second flap 16 shows a large crop material pressure, the scraper floor conveys crop material away from the base part 13 of the front wall 10.

EP 2614703 A2 discloses a square baler which forms cuboid bales in a bale chamber 80. The bale chamber 80 comprises a fixed first chamber part 82 with fixed configuration and a subsequent second part 83 ending into a rectangular opening for ejecting the formed bale. At least one side wall 160 of the second part 83 comprises two wall parts 160a, 160b which are pivotally connected with each other, cf. Fig. 2 and Par. (0048). A hydraulic actuator 140 can act onto both wall parts 160a, 160b. A crop parameter 40 is obtained by a configuration selector 60 or via a sensor, e.g. a crop humidity sensor, cf. par. [0060]. Steering signals 55 for steering the actuator 140 are generated based on the crop parameter 40 such that the configuration of the bale chamber 80 is changed. A plunger 13 oscillates in the bale chamber 80 and presses injected crop material to cuboid bales. A user can select a pressure profile. The baler is operated accordingly and such a predetermined pressure onto the plunger 13 is not exceeded, cf. par. [0049].

EP 1535506 B1 discloses a round baler (Rundballenpresse) with a pressing chamber (Pressraum 11). A conveying rotor (Förderrotor 19) with two lateral conveying tines (Förderzinken 20) and several center pressing tines 36 convey picked-up crop material through a feeding channel 18 towards the pressing chamber 11. The picked-up crop material is conveyed through the feeding channel 18 by means of both lateral conveying rotors 19 and three pressing tines 36 positioned in a center segment of the feeding channel 18. The feeding channel 18 is delimited from below by a pivotal channel bottom (Förderkanalboden 21). The moisture (Feuchtegehalt) of the picked-up crop material is measured. A moisture sensor 22 is integrated into the feeding channel bottom 21. The pressing tines 36 apply a defined force onto the crop material. A force sensor (Anpresskraftsensor 23) measures the force which the crop material applies onto the moisture sensor 22 in the feeding channel bottom 21. In one embodiment the moisture sensor 22 can be moved upwards and downwards and a force sensor 23 measures the enforced movement of the moisture sensor 22 caused by the conveyed crop material.

EP 2777383 A1 discloses a round baler which forms a round bale of a desired crop material density. The density pressure which the bale forming members (pressing belts and/or pressing rollers) apply on the crop material in the pressing chamber is controlled. The pressure is controlled depending on at least one measured operating condition. The following parameters can be measured: bale size, bale weight, bale size increase, bale moisture content, volume of incoming crop.

The elder right DE 102015104390 A1 discloses an agricultural loader wagon 1 with a loading chamber (Laderaum 3), a loading assembly (Ladeaggregat 2) and a bottom conveyor (Kratzboden 4). The loading assembly 2 picks up loose crop material from the ground and conveys it into the loading chamber 3. The bottom conveyor 4 conveys the crop material away from the loading assembly 2. A flap (Befüllklappe 11) can pivot around a horizontal axis 12 which is positioned about the loading assembly 2. This flap 11 can apply pressure from above to the crop material in the loading chamber 3. A position sensor 15 measures the pivotal position of the flap 11. A control unit (Steuergerät 16) receives signals from the flap position sensor 15 and controls the bottom conveyor 4. The bottom conveyor 4 is controlled such that it conveys crop material away from the loading assembly 2 until the flap 11 is pivoted downwards and reaches a given threshold. The flap 11 is connected with a piston rod (Zylinderstange 18a) of a hydraulic piston-cylinder unit (Hydraulikzylinder 18). A pressure sensor 21 measures the actual pressure (Ist-Druck) in the piston-cylinder unit 18 and transmits signals to the control unit 16. The piston-cylinder unit 18 is in fluid communication with the hydraulic valve 19 and a fluid storage 20. The control unit 16 controls the scraper floor 4 and also adjusts the actual pressure in the piston-cylinder unit 18 to a target pressure (Soll-Druck). Thereby the force which the flap 11 applies onto the crop material in the loading chamber is controlled. A required pressure value generator (Sollwert-Generierungseinrichtung 24) calculates the required pressure P-Soll depending on user inputs as well as on a measured parameter of the crop material or on the harvesting conditions. Examples for such parameters are the cutting length (Schnittlänge) or the moisture (Feuchtigkeit) of the crop material. The value generator can further process operating conditions of a propelled vehicle which pulls the loader wagon 1.

### SUMMARY OF THE INVENTION

A problem solved by the invention is to provide an agricultural vehicle with the features of the preamble of claim 1 and an agricultural storing method with the features of the preamble of claim 23 wherein the risk that the crop material in the loading chamber is damaged by too high pressure is further reduced without reducing the vehicle efficiency significantly more than necessary.

This problem is solved by an agricultural vehicle with the features of claim 1 and by an agricultural storing method with the features of claim 22. Preferred embodiments are specified in the depending claims.

The agricultural vehicle according to the invention comprises
- a loading chamber for storing crop material,
- an inlet guiding into the loading chamber,
- a conveyor for crop material stored in the loading chamber,
- a conveyor drive for moving the conveyor,
- a wall actuator, and
- at least one sensor for measuring a property of crop material.

The loading chamber is provided and surrounded by several walls and is arranged to store crop material. At least one wall and/or at least one part of a wall of the loading chamber are pivotal with respect to the inlet. The wall actuator can pivot the pivotal wall or wall part or can selectively inhibit or enable such a pivotal movement in a pressure-reducing direction. The conveyor drive can move the conveyor. When being moved, the conveyor can move crop material contained in the loading chamber away from the inlet. The moved crop material remains temporarily in the loading chamber.

Performing or enabling the pivotal movement of the wall or wall part in the pressure-reducing direction reduces the pressure which is applied onto the crop material contained in the loading chamber. The step that the moved conveyor moves crop material away from the inlet also reduces the applied pressure.

The or at least one sensor on board of the vehicle is arranged for measuring a value indicative of a property of crop material which is or will be carried on board of the vehicle and is already stored or is to be stored in the loading chamber.

By performing the agricultural method according to the invention crop material is injected and stored in the loading chamber. Pressure is applied onto the crop material which is stored in the loading chamber.

The agricultural vehicle according to the invention is operated as follows and the storing method according to the invention comprises the following steps:
- Crop material is injected through the inlet into the loading chamber. The injected crop material is stored and remains in the loading chamber.
- At least one time the conveyor drive is triggered and moves the conveyor. The moved conveyor conveys crop material away from the inlet.
- The or at least one crop material property sensor measures a value indicative of the or one crop material property of crop material which is or will be carried on board of the vehicle.
- Depending on the measured crop material property the applied pressure is automatically reduced at least one time, i.e. at least one pressure-reducing step is performed. This crop material property is measured by the or one crop material property sensor mounted on board of the vehicle.

For reducing the applied pressure depending on the crop material property the following pressure-reducing step steps is performed at least one time:
- The conveyor drive is triggered and moves the conveyor and the moved conveyor conveys crop material stored in the loading chamber away from the inlet.

Optionally, for reducing the applied pressure depending on the crop material property the following pressure-reducing step is performed additionally at least one time:
- The wall actuator is triggered and pivots the pivotal wall or wall part or enables such a pivotal movement in the pressure-reducing direction.

### ADVANTAGES

In general the vehicle transports the injected and collected crop material to at least one depositing location. After the transported crop material is removed out of the loading chamber, the crop material is typically used as fodder for animals, e.g. for animals which yield milk or meat or wool. Therefore it is essential that the crop material which was carried in the loading chamber of the vehicle can actually serve as quality fodder. If too high pressure were applied onto the crop material in the loading chamber, the crop material would pulp or even be crushed. This reduces the fodder quality or makes the crop material even be not usable as fodder. The invention automatically reduces the risk of this undesired event and therefore increases the fodder quality.

In order to avoid damaging the crop material, it is required that the pressure applied onto the crop material in the loading chamber is kept below a pressure threshold. According to the invention the conveyor (and optionally additionally the wall or wall part) of the agricultural vehicle is moved in the pressure-reducing direction. Moving this part decreases the pressure which is applied onto the crop material currently contained in the loading chamber. It is possible to measure a value indicative of the mass flow or of the weight or density or volume of the crop material to be injected into the loading chamber or of the amount of crop material in the loading chamber. The invention, however, avoids the need of measuring such a value. It suffices to keep the applied pressure below a pressure threshold. Thanks to the invention this pressure threshold can automatically be calculated depending on the or one measured crop material property. It is not necessary to provide one fixed pressure threshold for every possible operation of the vehicle.

It is desired that the vehicle should operate with high efficiency. The capacity of the loading chamber should be used to that extent which is possible, i.e. it should be possible to inject as much crop material as possible into the loading chamber without reducing the fodder quality. Therefore the injected crop material should be compressed as much as possible for reducing its volume and for storing as much crop material as possible in the loading chamber. Therefore the pressure applied onto the crop material should be as high as possible without damaging the crop material.

According to the invention the applied pressure is reduced by moving the conveyor (and optionally additionally the pivotal wall or wall part) or by enabling a movement of the movable part in the pressure-reducing direction. Thanks to the invention it is possible to keep the maximal applied pressure below a pressure threshold wherein the pressure threshold depends on the or at least one measured property of the crop material. This pressure-reducing effect is achieved by moving the part or enabling the part movement. In particular it is possible to keep the applied pressure below a pressure threshold and to automatically calculate and/or vary the pressure threshold depending on the actual moisture or the dry matter content of the crop material on board of the vehicle. Thanks to the invention the capacity of the loading chamber can often better be used as the crop material can be compressed to a higher amount without reducing the risk of damaging the crop material. It is possible but not necessary to establish in advance a standard pressure threshold for the operation or a respective threshold for every kind of crop material. It is also possible but not necessary that an operator manually selects or determines a pressure threshold.

Thanks to the invention crop material which can be highly compressed without being damaged is indeed stored with a high compression in the loading chamber. In contrast crop material which should not be highly compressed is stored with less pressure and compression. Thanks to the invention the same agricultural vehicle can subsequently be used on agricultural fields with different soil and crop properties. It is not necessary to perform any amendment at the vehicle between two subsequent operations on different fields and/or under different environmental conditions (rain, wind, e.g.). In particular no manual adaptation work for adapting the vehicle needs to be performed.

The invention enables a fully automatic operation of the vehicle. It is possible but not necessary that a human operator watches or monitors the crop material or the property sensor, accesses the crop material property, or triggers a pivotal movement of the or of one movable part - neither before nor during the operation of the vehicle.

The invention can quite easily be implemented on board of an existing agricultural vehicle. The wall, the conveyor, the wall actuator, and the conveyor drive are often already mounted on board of the vehicle. It suffices to add a crop material property sensor and to adapt a control unit.

### PREFERED EMBODIMENTS

In one embodiment the or one pivotal wall or a pivotal part of a wall of the loading chamber is at least one time moved in the pressure-reducing direction depending on the or at least one measured crop material property, preferably the front wall or a part of the front wall - seen in the travelling direction of the vehicle. According to one implementation of this embodiment at least one entire wall of the loading chamber is pivotal with respect to the chamber bottom and at least one further wall. Preferably this wall is pivotally connected with the bottom of the loading chamber. Or one part of a wall, e.g. an upper flap, is pivoted with respect to a further part of the same wall. Thereby the volume of the loading chamber can significantly be increased or decreased in a controlled way. This feature increases the flexibility of the vehicle during operation.

The compressed crop material in the loading chamber tends to pivot this wall or wall part such that the volume of the loading chamber is increased and the applied pressure is reduced. If the wall actuator actively pivots the wall or wall part in the corresponding pressure-reducing direction or enables temporarily this movement, the chamber volume is increased and the pressure applied onto the crop material is decreased. According to the embodiment this wall actuator operates depending on the or at least one measured crop material property.

Often the vehicle according to the invention is pulled in the travelling direction by a propelled vehicle, e.g. a tractor. The pivotal front wall points to the pulling propelled vehicle wherein the term "front" refers to the travelling direction. Pivoting the front wall does not increase the length of the combination comprising the propelled vehicle and the vehicle with the front wall.

In one implementation the or one wall actuator can actively pivot the wall or wall part in the pressure-reducing direction as well as in the opposite direction, i.e. the wall actuator is a double-acting actuator. In the beginning of the operation the actuator compresses crop material in the loading chamber by reducing the chamber volume or keeping the chamber volume at a minimal value. Later the chamber volume is increased as the wall actuator pivots the wall or wall part in the pressure-reducing direction. The wall actuator is preferably controlled such that the applied pressure remains below a given threshold which depends on the crop material property.

In an alternative implementation the wall actuator tends to pivot the wall or wall part against the expanding force of the crop material in the loading chamber or keep the wall or wall part in its current position. The wall actuator further or alternatively operates as a retaining device providing retaining force. It is possible that the wall actuator just applies retaining force but cannot actively pivot the wall or wall part. For increasing the chamber volume and for reducing the applied pressure, the wall or wall part must be pivoted against this retaining force provided by the actuator. In this alternative implementation the wall actuator therefore selectively inhibits or enables the wall movement in the pressure-reducing direction. Preferably the wall actuator is automatically controlled such that the retaining force does not exceed a pressure threshold wherein this pressure threshold depends on the measured crop material property.

In a preferred embodiment the crop material is conveyed through a feeding channel towards the loading chamber whereas the feeding channel is positioned outside of the loading chamber. Therefore crop material is accumulated in the loading chamber in a position near the inlet. The conveyed crop material is injected through the inlet into the loading chamber. For reducing the pressure applied onto injected crop material, the conveyor which is positioned in or at the loading chamber conveys crop material away from the inlet. Preferably the conveyor operates as a scraper floor (Kratzboden) or further bottom conveyor and comprises several dogs which engage crop material from below. Thanks to the operation of the conveyor the amount of crop material stored in the chamber and adjacent to the inlet is reduced. The drive for the conveyor is actuated from time to time and causes the conveyor to move away crop material and is de-activated again. Preferably the invention is combined with this embodiment: The conveyor drive operates, i.e. moves and stops the conveyor, depending on the or at least one measured crop material property.

These two embodiments can be combined in different ways. In one embodiment the wall or wall part is pivoted in the beginning of the vehicle operation and preferably depending on the or at least one measured crop material property, preferably after the crop material property is measured for the first time. The pivotal wall or wall part keeps its position until the loading chamber is made empty again. The drive for moving the conveyor is activated and deactivated several times during the operation of the vehicle, preferably depending on the or at least one measured crop material property. Several times the driven conveyor moves crop material away from the inlet. The conveyor is therefore operated in a start-stop way of operation. It is also possible that in addition the wall is pivoted several times during operation. It is possible that the conveyor is triggered depending on the pressure applied onto the crop material in the chamber and on at least one the crop material property. It is also possible that the conveyor velocity depends on the applied pressure and the crop material property. The conveyor might even be moved continuously but with varying velocity.

In one embodiment the or one value indicative of the or one crop material property is measured by analyzing crop material which is already received and is on board of the vehicle. Preferably the crop material property is measured several times and at least the latest measured property value is used for reducing the applied pressure.

According to the invention at least one crop material property sensor is mounted on board of the vehicle. In one embodiment this sensor measures the crop material property at a location which is positioned on board of the vehicle and outside of the loading chamber. In one implementation at least one sensor measures at least one value indicative of the crop material property while the crop material is conveyed through a feeding channel towards the loading chamber. The inlet guiding into the loading chamber may form the outlet of this feeding channel. The crop material property sensor can measure the property at a single location or over an array of measuring points, e.g. by using an array of measuring cells. This array can extend over the width of the feeding channel, i.e. perpendicular to the conveying direction, or along the feeding channel. It is also possible that a value indicative of the crop material property is measured by analyzing crop material at a measuring location upstream of the feeding channel or in the loading chamber.

In a preferred embodiment the or at least one crop material property is measured by using an electronic map which shows the respective crop material property value at different geo-positions, e.g. at different agricultural fields or at different areas or locations of one field. The vehicle with the loading chamber - or a further vehicle being in a data connection and in mechanical connection with the vehicle according to the invention - comprises a geo-position sensor which measures the current geo-position of the vehicle with the loading chamber. The or one crop material property sensor on board of the vehicle according to the invention has access to the property map, receives signals from the geo-position sensor, and applies the measured current geo-position of the vehicle onto the map for yielding a crop material property at the current position of the vehicle. The crop material property obtained in this way is used for the movement of the wall or wall part and/or the conveyor. It is also possible to use the map for predicting a crop material property value at a location which the vehicle will reach in the future while being moved over ground. The future crop material property can be used for triggering or performing the movement in advance. The embodiment with the electronic map saves a crop material property sensor on board of the vehicle itself.

In one implementation the property map yields respective standard crop material property values for different geo-positions, i.e. regardless of the current environmental conditions. It is possible that an environmental condition, e.g. the current humidity or the amount of dropped rain, is measured by a further sensor and is further used for deriving the crop material property. The or at least one measured environmental condition is used for adapting or correcting the standard crop material property value obtained from the map.

It is possible to combine both embodiments, i.e. the vehicle comprises at least one crop material property sensor for crop material on board of the vehicle and a geo-position sensor and has access to the crop material property map. In one implementation the or at least one crop material property yielded by the map is used before starting the operation of storing crop material in the loading chamber. Preferably an average crop material property is derived. The wall actuator moves the or one pivotal wall or wall part into an initial position, preferably depending on the average crop material property. This initial wall position depends on the average crop material property yielded by evaluating the property map. In one implementation the wall is pivoted into an initial position. Later the entire pivotal wall or wall part - or a further movable part, e.g. a conveyor - is moved in the pressure-reducing direction by using at least one value measured by the crop material property sensor on board of the vehicle. If one sensor fails, the other sensor can still provide values indicative of the crop material property, i.e. the sensor combination provides redundancy. In addition this embodiment yields and uses the proper crop material property even if the actual property differs from the property value yielded by evaluating the map, e.g. due to varying or differing environmental impacts.

In one embodiment the actuation of the wall actuator and/or conveyor drive is automatically triggered by an event which depends on the or at least one measured crop material property. The triggered actuator performs or enables the movement of the connected part (wall or wall part or conveyor) in the pressure-reducing direction. In one implementation not only the start of the actuator's operation but also the moving duration and/or further parameters of the actuator, e.g. the conveying velocity or duration or the pivoting angle or velocity, depend on the or at least one measured crop material property.

In one implementation the event triggering the wall actuator and/or conveyor drive is the event that a measured value indicative of the pressure applied onto the crop material in the loading chamber exceeds a pressure threshold. This pressure threshold is automatically calculated before or during operation. The calculated pressure threshold depends on the or at least one measured crop material property. Thanks to this implementation it is possible but not necessary that a human operator or a human technician sets a pressure threshold during operation or in advance. It is possible that the pressure threshold is automatically calculated during operation depending on the or at least one measured crop material property. In one implementation a human operator can override the automatically calculated pressure threshold. In one implementation the duration or velocity of the wall or conveyor movement depends on the temporal change of the applied pressure.

In one embodiment the or one property sensor is implemented as a near infrared spectroscopy (NIRS) sensor. Such an NIRS sensor is well-known in the art and can often measure several crop material properties in a contactless manner.

In one implementation the or one crop material property is the moisture of the crop material already stored or to be stored in the loading chamber. The higher the moisture is the lower is the calculated pressure threshold. In a similar implementation the dry matter content of the crop material is measured, e.g. as a percentage of dry material at the entire crop material weight. The higher the dry matter content is the higher is the calculated pressure threshold. Crop material with high moisture or low dry matter content must not be compressed with high pressure as the fluid cannot be compressed and the dry matter will therefore be highly compressed.

One way of measuring the moisture or dry matter content is to measure the electrical conductivity of the crop material. In one implementation a voltage is applied to the crop material and the resulting amperage is measured. It is also possible that the moisture or dry matter content is measured in a contactless manner by means of a near infrared spectroscopy (NIRS) sensor.

Thanks to the operation of the wall actuator and/or the conveyor drive it is possible to automatically keep the actually applied pressure below a triggering pressure threshold wherein the pressure threshold is automatically calculated before and/or during operation. The wall actuator or conveyor drive is triggered as soon as the measured actual pressure reaches the triggering pressure threshold. Preferably this triggering pressure threshold is calculated depending on a maximal pressure threshold - that is that maximal admissible pressure which can be applied onto the crop material in the loading chamber without damaging the crop material. This maximal pressure threshold depends on the measured crop material property, e.g. on the moisture, preferably reduced by a safety pressure value. The maximal pressure threshold is also automatically calculated depending on the or at least one measured value indicative of the crop material property. Thanks to the embodiment with the triggering pressure threshold below the maximal pressure threshold the actuator reduces the pressure before the applied pressure reaches the maximal pressure threshold. The triggering pressure threshold may be a percentage of the maximal pressure threshold or be the maximal pressure reduced by a given constant value.

The or one measured crop material property can be the moisture or dry matter content, the crop material color, a value indicative of a chemical composition of the crop material, the existence and concentration of a substance in the crop material, or the specific weight, e.g. It is possible that several crop material properties are measured and used for the pressure reduction.

In one embodiment a value indicative of the pressure applied onto the crop material in the loading chamber is automatically measured. One implementation how to measure the pressure is to measure the pressure which the crop material in the loading chamber applies onto a moveable element of the vehicle. This moveable element can belong to a force sensor or can be a pivotal wall or a pivotal part of a wall wherein the pivotal part, e.g. a wall flap, limits or is adjacent to the loading chamber. It suffices to keep the pressure applied onto the wall below a pressure threshold. The applied pressure occurring adjacent to the wall will be higher than the pressure applied in the center of the loading chamber.

It is also possible that one wall or one part of a wall is pivotal and the or one actuator is a hydraulic or pneumatic actuator which tends to pivot one wall or wall part against the pressure applied by the crop material. The hydraulic or pneumatic pressure in a hydraulic or pneumatic circuit for this actuator is measured. The measured hydraulic or pneumatic pressure serves as a value indicative of the pressure applied onto the crop material. It is also possible that the actuator consumes kinetic or electric energy for pivoting the wall and that the required torque or the energy consumption is measured and yields a value indicative of the applied pressure. The conveyor can also be driven by a hydraulic or electric motor or by a sprocket wheel or by a shaft, e.g.

In one embodiment a torque sensor measures a value indicative of the torque required to drive a device of the vehicle, e.g. a pick-up unit and/or a conveying device. This device conveys crop material towards the or inside of the loading chamber. The wall actuator or conveyor drive actuator is operated depending on the or one crop material property and in addition on the measured torque.

The agricultural vehicle according to the invention can be a loader wagon which picks up crop material from the ground, conveys the pick-up crop material through a feeding channel towards the inlet, injects the conveyed crop material through the inlet into the loading chamber, and stores the injected crop material under pressure in the loading chamber. The vehicle can also be a transport wagon which receives crop material from a harvester, e.g. a field chopper or combine harvester, and does not necessarily comprise a pick-up unit.

These and other aspects of the invention and of the preferred embodiment will be even more apparent from the detailed embodiment as described below and will be elucidated in detail there.

### BRIEF DESCRIPTION OF THE DRAWINGS

Fig. 1 shows a front part of a loader wagon using the invention with the pivotal front wall being in a remote position with respect to the pulling tractor;
Fig. 2 shows the front part of Fig. 1 with the pivotal front wall being pivoted towards the pulling tractor.

### DETAILED DESCRIPTION OF EMBODIMENT

In the embodiment the invention is used on board of an agricultural vehicle in the form of a pulled self-loading loader wagon. Such a loader wagon comprises a loading chamber surrounded by a bottom, a front wall, a rear wall, and by two side walls and operates as follows:
- The loader wagon is pulled by a propelled vehicle, e.g. a tractor, in a travelling direction over ground.
- A driven pick-up unit picks up loose crop material (grass, hay, silage, e.g.) from the ground.
- A driven conveying rotor conveys the picked-up crop material through a feeding channel in a conveying direction opposite to the travelling direction towards the loading chamber.
- Optionally a cutting assembly cooperates with the conveying rotor and cuts the picked-up and conveyed crop material.
- The conveyed crop material is injected through an inlet into the loading chamber.

The inlet is positioned at or near the bottom and adjacent to the front wall of the chamber.
- From time to time a scraper floor (Kratzboden) or further bottom conveyor below the loading chamber conveys crop material in the loading chamber away from the inlet and towards the rear wall of the loading chamber.
- Later the rear wall is opened and the crop material is removed out of the loading chamber. The crop material is removed by the bottom conveyor and in one embodiment by pivoting the entire loading chamber into a descending position.
- In one embodiment several dosing rollers at the rear end of the loading chamber are rotated and control the amount of emitted crop material.
- After removing the crop material out of the loading chamber, the loading chamber is empty again and can receive further crop material.

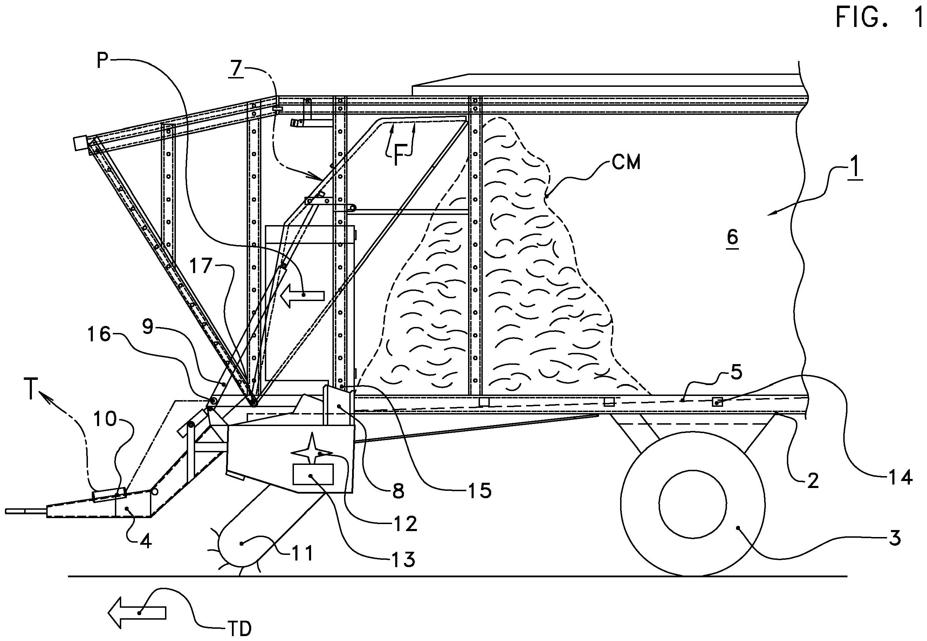

Fig. 1 and Fig. 2 show the front part of a loader wagon on board of which the embodiment of the invention is implemented. The loader wagon 1 is pulled or pushed over ground by a propelled vehicle (not shown), e.g. a tractor or further harvester, in a travelling direction TD (in Fig. 1 and Fig. 2 from right to left) and comprises the following parts:
- a loader wagon frame 2,
- several ground-engaging wheels 3 (omitted in Fig. 2) which are mounted at the loader wagon frame 2,
- a towing unit 4 which is pivotally mounted at the loader wagon frame 2 and which can mechanically be connected with and disconnected from the corresponding hitch (not shown) of the pulling vehicle,
- a loading chamber 6 positioned on the loader wagon frame 2 and provided by several surrounding walls and a bottom,
- a driven scraper floor (Kratzboden) 5,
- several rollers (not shown) around which the scraper floor 5 is guided,
- a motor 14 for the scraper floor 5 which serves as the conveyor drive and can selectively move or stop the scraper floor 5 by rotating or stopping at least one roller for the scraper floor 5,
- a pivotal front wall 7 for the loading chamber 6 comprising three parts 7a, 7b, 7c,
- a hydraulic wall actuator 9 for pivoting the front wall 7 (to be explained below),
- two side walls and a rear wall (not shown),
- a hydraulic pressure sensor 16,
- a crop material property sensor 13,
- optionally a geo-position sensor (not shown),
- a pick-up unit 11 with a driven pick-up drum,
- a feeding channel 8 guiding from the pick-up unit 11 into the loading chamber 6,
- an outlet 15 of the feeding channel 8 wherein the outlet 15 serves as an inlet guiding into the loading chamber 6,
- a conveyor rotor 12 which engages from above into the feeding channel 8 and serves as the channel conveying device,
- optionally a cutting assembly (not shown) engaging from below into the feeding channel 8 and cooperating with the conveyor rotor 12, and
- a loader wagon control unit 10 mounted on top of the towing unit 4.

In the embodiment the front wall 7 consists of a lower part 7a, a middle part 7b, and an upper part 7c such that the front wall 7 has the shape of a hutch, cf. Fig. 2. These three front wall parts 7a, 7b, 7c are rigidly connected with each other. An angle between two adjacent wall parts 7a, 7b and 7b, 7c occurs. The scraper floor 5 forms a part of the bottom of the provided loading chamber 6 and comprises several dogs (not shown) which engage from below crop material in the loading chamber 6.

Preferably the loader wagon control unit 10 is in data connection (arrow T) with the control unit of the propelled vehicle pulling the loader wagon 1, e.g. a tractor control unit. This data connection can be a wired or wireless connection and is preferably implemented according to the ISObus standard (ISO 11783). The tractor control unit controls moved tractor parts and controls a display unit in the tractor's driver cab. The operator (tractor driver) can make user inputs, e.g. for setting an initial pivotal position of the pivotal front wall 7. The tractor control unit processes these user inputs. On the other hand the loader wagon control unit 10 generates alerts and messages which are transmitted to the tractor control unit and are displayed on the tractor display unit.

As can be seen in Fig. 1, crop material CM is injected through the inlet 15 into the loading chamber 6. Injected crop material CM is accumulated adjacent to the inlet 15. The increasing amount of crop material CM in the loading chamber 6 applies pressure P onto the front wall 7 and onto the side walls. As shown in Fig. 1 a top position of accumulated crop material CM in the loading chamber 6 applies a force F onto the top front wall part 7c. In turn the crop material CM in the loading chamber 6 is pressed together. Further crop material CM is injected into the loading chamber 6. The pressure applied onto the crop material CM must be kept below a maximum pressure threshold (see below).

In the embodiment the chamber side walls are rigidly connected with the loader wagon frame 2 whereas the entire front wall 7 can be pivoted with respect to the loader wagon frame 2 around a wall pivoting axis 17. This wall pivoting axis 17 is horizontal and is perpendicular to the travelling direction TD and to the drawing planes of Fig. 1 and Fig. 2. Preferably the wall pivoting axis 17 is approximately in the height of the channel outlet 15 and positioned between the outlet 15 and the pulling tractor. In the embodiment the front wall 7 can be pivoted around the axis 17 about a maximal angle of approx. 60 degrees. A respective extension 6' is mounted at the side wall and is pulled forward when the front wall 7 is pivoted forward.

By pivoting the front wall 7 towards the pulling tractor, i.e. in the travelling direction TD, the volume and therefore the storing capacity of the loading chamber 6 is increased. As a consequence of pivoting the front wall 7 the pressure applied onto the crop material CM decreases. The storing capacity is decreased and the applied pressure is increased if the front wall 7 is pivoted backwards.

A hydraulic wall actuator 9 is connected with the loader wagon frame 2 and with the pivotal front wall 7 and can pivot the front wall 7 around the wall pivoting axis 17. In addition the wall actuator 9 supports from below the pivoted front wall 7. Preferably the hydraulic actuator 9 comprises at least one piston-cylinder device which is supplied with a pressurized hydraulic fluid. The fluid source can be mounted on board of the loader wagon 1 itself or on board of the pulling tractor. Expanding the actuator 9 causes the front wall 7 to pivot backwards, i.e. the chamber volume is decreased.

In one embodiment the hydraulic wall actuator 9 operates as a double-acting actuator, e.g. can selectively pivot the front wall 7 in both pivoting directions or keep the front wall 7 in the current position. In a further embodiment the hydraulic wall actuator 9 is a single-acting actuator and can pivot the front wall 7 opposite to the travelling direction TD against the pressure applied by the crop material CM in the loading chamber 6, i.e. can only decrease the storing capacity of the loading chamber 6. In this embodiment the hydraulic actuator 9 additionally serves as a retaining device which keeps the pivotal front wall 7 in its position against the pressure P applied by the crop material CM, e.g. inhibits that the chamber volume is increased by the injected crop material. Preferably the wall actuator 9 operating as a single-acting actuator applies a retaining force onto the front wall 7. This retaining force is kept below a given force threshold. Thereby the actuator 9 serves as a retaining device and selectively inhibits or enables the crop material CM to pivot the front wall 7 in the travelling direction TD, thereby increasing the loading chamber volume against the retaining force of the actuator 9, if the applied pressure P exceeds a pressure threshold.

In one embodiment an electro-magnetic valve regulates the flow of hydraulic fluid into the or from the actuator 9. A pressure relief valve, e.g. a proportional valve (not shown), keeps the fluid pressure for the hydraulic actuator 9 below a triggering pressure threshold (to be explained below). The control unit 10 can generate control inputs for the pressure relief valve, thereby setting the pressure threshold. Further implementations of the hydraulic wall actuator 9 are possible.

The loader wagon control unit 10 generates control inputs for different parts of the loader wagon 1, in particular for the valve regulating the hydraulic flow into and from the wall actuator 9, the pressure threshold for the pressure relief valve, and for the motor 14 for driving the scraper floor 5. In response to corresponding control inputs the wall actuator 9 can pivot the front wall 7 about a given pivoting angle increment and/or with a given velocity over a given time span (in a pivoting direction). The motor 14 can drive the scraper floor 5 along a given distance and/or with a given velocity over a given time span (in a conveying direction).

During operation the loader wagon control unit 10 automatically triggers at least one pressure-reducing step for reducing the pressure which is applied onto the crop material CM in the loading chamber 6. Two different kinds of pressure-reducing steps can be performed independently from each other:
- The wall actuator 9 pivots the wall 7 towards the pulling tractor or enables such a pivotal movement such that the chamber volume is increased.
- The motor 14 moves the scraper floor 5 and the moved scraper floor 5 conveys crop material CM away from the inlet 15.

In every implementation of the embodiment the hydraulic actuator 9 is operated such that the pressure which the pivotal front wall 7 applies onto the crop material CM in the loading chamber 6 remains below a maximal pressure threshold. This maximal pressure threshold depends on at least one measured property of the crop material carried on board of the loader wagon 1. In the embodiment the control unit 10 automatically calculates this maximal pressure threshold during operation (to be explained below).

In the embodiment a pressure sensor 16 measures a value indicative of the pressure which the crop material CM applies onto the pivotal front wall 7. As the crop material CM is injected through the inlet 15 positioned adjacent to the front wall 7, the expansion of the crop material CM in the loading chamber 6 is only limited by the walls and the bottom of the loading chamber 6 formed by the scraper floor 5. The pressure applied onto the crop material CM is higher at a location adjacent to the front wall 7 and thereby adjacent to the pressure sensor 16. The pressure applied onto crop material CM in the interior of the loading chamber 6 will not be higher than pressure P applied adjacent to the front wall 7. Therefore the pressure sensor 16 can measure the highest pressure value which actually occurs in the loading chamber 6.

In one embodiment the pressure sensor 16 is implemented as a force sensor. In one implementation the crop material in the loading chamber 6 applies a force onto a movable element belonging to the or connected with the force sensor and inserted into the pivotal front wall 7. The force sensor measures the applied force and derives the pressure P. In an alternative implementation the pressure sensor measures the force which the front wall 7 applies from above onto the hydraulic actuator 9.

In a further implementation (shown in Fig. 1) the pressure sensor 16 measures the pressure of the hydraulic fluid in the hydraulic circuit which supplies fluid to the hydraulic actuator 9 for the pivotal front wall 7. The higher the pressure P applied by the crop material CM is the higher the fluid pressure in the hydraulic circuit for the hydraulic wall actuator 9 will be. In every implementation the signals from the pressure sensor 16 are transmitted to the loader wagon control unit 10.

At least one crop material property sensor 13 mounted on board of the loader wagon 1 measures a property of the crop material CM after the pick-up unit 11 has picked up this crop material and before the crop material CM is injected into the loading chamber 6. The measuring position can be adjacent to the feeding channel 8. It is also possible that the property sensor 13 measures a property of the crop material CM already inserted into the loading chamber 6.

The measured crop material property can be at least one property selected out of the following possible properties to be measured:
- the crop material moisture, preferably the weight percentage of liquid in the crop material,
- the dry matter content, preferably the weight percentage of dry matter in the crop material,
- the specific weight,
- the concentration of a given chemical substance in the crop material,
- the color, e.g. in the visible or infrared light spectrum, or
- the maximal size of the crop material particles.

It is possible that several crop material properties are measured by the same property sensor or by different property sensors.

In order to avoid the crop material CM to be damaged, the actual pressure which is applied onto the crop material CM in the loading chamber 6 must be kept below a maximal pressure threshold. According to the invention this maximal pressure threshold is not given it advance but is automatically calculated during operation, namely by the loader wagon's control unit 10 and depending on the or on at least one measured crop material property. The maximal pressure threshold can depend as follows on the crop material properties mentioned above:
- The higher the crop material moisture is the lower is the maximal pressure threshold. The reason: The liquid in the crop material CM can hardly be compressed. The applied pressure only compresses the dry matter. Too high pressure onto wet crop material would pulp or even crush dry matter in the crop material and would yield fodder of pure quality.
- The higher the dry matter content is the higher is the maximal pressure threshold.
- The higher the specific weight is the lower is the maximal pressure threshold.

Crop material with a high specific weight can hardly be compressed without being damaged. One reason: The high specific weight often results from a high moisture content.
- An electronic table assigns respective maximal pressure thresholds to different possible crop material colors. This table is generated in advance by using test results.
- The lower the maximal particle size is the lower is the pressure threshold. The reason: Small particles can be compressed to a smaller amount than large particles.

It is possible to measure and use several crop material properties for operating the loader wagon 1. It is possible that several crop material property sensors are mounted on board of the loader wagon 1, e.g. for different properties or for measuring the same property at different locations of the loader wagon 1 or for providing redundancy.

In one implementation the or at least one crop material property is measured while the crop material CM is conveyed through the feeding channel 8. In one implementation the or one crop material property sensor 13 is positioned between the conveyor rotor 12 and the inlet 15 such that cut crop material CM is analyzed while being conveyed, after being cut, and before being injected through the outlet 15 into the loading chamber 6. In one implementation the sensor 13 is positioned behind a feeding channel wall, e.g. behind a window, and is protected and operates in a contactless manner. It is possible that several crop material sensors are distributed over the feeding channel 8, e.g. along the width and/or the length of the feeding channel 8, and form a sensor cell array. It is also possible that a sensor, e.g. a camera, is mounted at the pick-up unit 11, e.g. at the pick-up unit frame or at the towing unit 4. In one implementation of this case the sensor measures the property of crop material on the ground which has not yet been picked up.

In a further implementation the property of crop material CM contained in the loading chamber 6 is measured. The or every sensor is positioned behind a wall of the loading chamber 6.

In one implementation at least one near infrared spectroscopy (NIRS) sensor on board of the loader wagon 1 measures the dry matter content or the moisture or chemical composition or a further property of the crop material. Electromagnetic radiation is directed onto the crop material and excites molecules. The used wave length is near infrared, preferably between 760 and 2,500 nm. A dispersive element disperses the reflected light into different wave length. A detector detects the different wave length in the dispersed light. The detection results are analyzed statistically and/or are compared with stored patterns.

In a further implementation the electric resistance or conductivity of the crop material CM is measured and yields a value indicative of the moisture or dry matter content. In one implementation an electric current between two points, e.g. between two opposing walls of the loading chamber 6 or of the feeding channel 8, is created wherein a portion of crop material CM is positioned between these two points. The resulting electric amperage is measured. The higher the amperage is the higher is the moisture.

In yet a further implementation a light source emits light against the crop material, e.g. light in the visible spectrum or in the infrared spectrum. Images are taken from the reflected light. These images are automatically evaluated, e.g. in order to detect the maximal particle size or the color distribution in the images.

As mentioned above the entire front wall 7 can be pivoted around the horizontal pivoting axis 17 about a maximal angle of 60 degrees. The hydraulic actuator 9 can move and can keep the front wall 7 in a desired pivotal position. When starting the operation of the loader wagon 1, the front wall 7 is pivoted into an initial pivotal position. In one embodiment the user inputs the desired initial pivotal position. In a further embodiment a given standard initial pivotal position is achieved without a user input and regardless of the crop material properties.

In yet a further implementation of determining the initial front wall position - or a later wall position - the control unit 10 evaluates signals from the geo-position sensor mounted on board of the loader wagon 1 and accesses a given electronic map showing the respective crop material property value for several geo-positions, e.g. a moisture map. The geo-position which the loader wagon 1 has in the beginning of the operation together with this property map yield an initial crop material property value which may differ from the actual property value which is later measured. This initial value is used for pivoting the front wall 7 into the initial position.

In one embodiment this initial position of the front wall 7 is automatically checked and amended if necessary after crop material CM is injected into the loading chamber 6. This wall position amendment can be performed before substantial pressure is applied onto the crop material CM in the loading chamber 6 or onto a chamber wall. The or at least one crop material property is measured as described above. The control unit 10 processes signals from the property sensor 13 and optionally from further property sensors (not shown) and evaluates a given computer-accessible table which assigns a respective pivotal position to several property values. This table is created in advance and is preferably stored on the control unit 10. The control unit 10 generates corresponding control inputs for the actuator 9. The actuator 9 pivots the front wall 7 into the calculated position assigned to the measured property value or values. This adjustment provides a loading chamber 6 with a high capacity without the risk that the crop material CM is damaged by too high pressure.

In one embodiment the front wall 7 keeps its initially taken position until the crop material CM is removed out of the loading chamber 6. Removing the crop material CM makes the loading chamber 6 empty again. In an alternative embodiment the front wall 7 is pivoted at least one further time during operation, i.e. while further crop material is injected, which is described below.

The loader wagon 1 continuous its operation, is further moved over ground, and injects further crop material CM into the loading chamber 6. In the embodiment the scraper floor 5 operates in a start-stop mode. Several times at least one crop material property is automatically measured, e.g. while crop material CM is conveyed along the feeding channel 8 or after it is injected into the loading chamber 6. An average property value or a maximum or minimum property value is derived by the control unit 10 from several sensor signals referring to different locations and/or time points, e.g. the average or maximal moisture value or average or minimal dry matter content. In the following the term "derived property value" is used.

The control unit 10 automatically calculates the maximal pressure threshold for this crop material depending on the or at least one derived property value. It is possible that the maximal pressure threshold is amended while or after further crop material CM is injected and the property of this further crop material CM is measured. The pressure applied onto the crop material CM in the loading chamber 6 must not exceed this maximal pressure threshold. For calculating the maximal pressure threshold the control unit 10 again evaluates a computer-accessible table which has been created in advance. The table for calculating the pressure threshold assigns a respective maximal pressure threshold value to different crop material property values.

At least one pressure sensor 16 measures the pressure applied onto the crop material CM in the loading chamber 6. In the embodiment the pressure sensor 16 measures a value indicative of the actual pressure P which the crop material CM applies onto the pivotal front wall 7. This measured pressure P applied by the crop material CM equals the pressure applied onto the crop material CM. It is possible that a further pressure sensor measures the respective pressure applied onto a side wall. Every measured pressure value must be kept below the calculated maximal pressure threshold.

The actual applied pressure must be kept below the maximal pressure threshold. Despite of activating the or one actuator (wall actuator 9 or conveyor drive 14) and of performing the pressure-reducing step the actual pressure P may still increase for a short time, in particular if further crop material CM is injected into the loading chamber 6. Therefore the control unit 10 automatically calculates a triggering pressure threshold depending on the maximal pressure threshold. The event that the measured applied pressure P reaches the triggering pressure threshold triggers at least one pressure-reducing step. In the embodiment this triggering pressure threshold is therefore below the maximal pressure threshold.

The triggering pressure threshold can further depend on the variation over time of the applied pressure and a value indicative of the mass flow of crop material into the loading chamber 6. In one implementation the torque which is required for rotating the conveyor rotor 12 is measured and serves as a value indicative of the mass flow. In a further implementation a mass flow sensor directly measures the mass flow, i.e. the amount per time of crop material through the feeding channel 8. In a further implementation the triggering pressure threshold is a given percentage of the maximal pressure threshold. In yet a further implementation the triggering pressure threshold depends on the maximal pressure threshold and on at least one further crop material property value.

In yet a further implementation the or at least one value of the crop material property at a future geo-position is predicted. The loader wagon 1 will reach this position in the future. The future property value is derived by using the current geo-position and a given trajectory or path of the loader wagon 1 and the property map, e.g. the moisture map, as mentioned above. The triggering pressure threshold may depend on the future property value.

In yet a further implementation which can be combined with an implementation mentioned above a value of the mass or mass flow of crop material is predicted, e.g. by analyzing the swath of crop material in front of the loader wagon 1. The triggering pressure threshold depends on the predicted mass flow.

The event that the or one measured pressure P reaches (or is close to reach) the calculated triggering pressure threshold is detected by the control unit 10. In response the control unit 10 initiates at least one step for reducing the applied pressure. In particular the following steps can be performed independently from each other:
- The control unit 10 triggers the motor 14 for the scraper floor 5. The motor 14 moves the scraper floor 5. The scraper floor 5 conveys crop material CM away from the front wall 7 and towards the rear wall of the loading chamber 6. The loader wagon control unit 10 calculates a conveying distance and/or a conveying velocity and conveying time span for the motor 14 driving the scraper floor 5. These control parameters can depend on the or one measured actual or predicted crop material property and/or on the measured crop material mass flow.
- The control unit 10 triggers the actuator 9. The triggered actuator 9 pivots the front wall 7 away from the rear wall and towards the pulling tractor, thereby increasing the chamber volume. The loader wagon control unit 10 calculates a pivoting angle implement and/or a pivoting velocity and time span (duration of pivoting the front wall 7) and generates corresponding control inputs for the valve regulating the actuator 9. These control parameters can also depend on the or on one measured actual or predicted crop material property and/or on the measured crop material mass flow.

In one embodiment the control unit 10 performs a pressure-reducing step by an open-loop control. The scraper floor 5 is moved backwards with a given velocity and over a given time span. The front wall 7 is pivoted about a given angle towards the pulling tractor.

In an alternative embodiment the control unit 10 performs a closed-loop control with the calculated triggering pressure threshold as the gain value. The control unit 10 processes measured values indicative of the actual applied pressure P while performing the pressure-reducing step. The control unit 10 performs the or at least one pressure-reducing step as long as the actual pressure P is above the or close to the calculated triggering pressure threshold. The velocity and/or the time span for moving the scraper floor 5 and/or the pivoting angle for the front wall 7 are therefore not given in advance but are variable and depend on the actual operation.

Additional possible measures to avoid too high pressure can be that
- the rotating velocity of the conveyor rotor 12 is reduced,
- the travelling velocity of the loader wagon 1 is reduced, or
- the cross section of the feeding channel 8 is increased.

These additional measures alone do not reduce the pressure applied on to crop material in the loading chamber 6 but can only avoid a further increase of the pressure.

In one embodiment the applied pressure can temporarily be increased as follows: If the applied pressure remains below a lower pressure threshold, the wall actuator 9 pivots the front wall 7 backwards, thereby reducing the chamber volume. This lower pressure threshold is below the calculated triggering pressure threshold and can depend on this triggering pressure threshold and/or on a crop material property.

As mentioned above the injection of further crop material must not make the pressure applied onto the crop material CM exceeding the calculated maximal pressure threshold. A pressure-reducing step will only succeed as long as sufficient space remains in the loading chamber 6. Preferably an alert is generated showing that the loading chamber 6 is full and that no further crop material should be injected into it if at least one of the following events is detected which also depend on the measured crop material property:
- The measured pressure P remains longer than a time span above the triggering pressure threshold although at least one pressure-reducing step is performed. This time span can be given or can be calculated depending on the measured mass flow into the loading chamber 6.
- The torque required to rotate the conveyor rotor 12 remains above a given torque threshold longer than a given time span.
- A filling level sensor, e.g. a switch or a light barrier, detects a high degree of filling of the loading chamber 6.
- The overall weight of the crop material CM in the loading chamber 6 reaches a given weight threshold.

As a reaction on generating the alert the injection of further crop material CM is automatically avoided until the loading chamber 6 is emptied. In particular the pick-up unit 11 is lifted. An alert is given to the operator.

Reference signs used in the claims will not limit the scope of the claimed invention. The term "comprises" does not exclude other elements or steps. The articles "a", "an", and "one" do not exclude a plurality of elements. Features specified in several depending claims may be combined in an advantageous manner within the scope as defined by the structure of the accompanying claims.

**LIST OF REFERENCE SIGNS**

| | |
|---|---|
| 1 | loader wagon, serves as the vehicle according to the invention |
| 2 | loader wagon frame, carries the loading chamber 6 |
| 3 | ground-engaging wheels, mounted at the frame 2 |
| 4 | towing unit of the loader wagon 1, can be connected with a tractor hitch |
| 5 | driven scraper floor (Kratzboden) forming a bottom conveyor |
| 6 | loading chamber of the loader wagon 1, surrounded by the pivotal front wall 7 and further walls |
| 6' | foldable extension of the left side wall |
| 7 | pivotal front wall, connected with the wall actuator 9, comprises the wall parts 7a, 7b, 7c |
| 7a, 7b, 7c | parts of the pivotal front wall 7, are rigidly connected with each other |
| 8 | feeding channel guiding into the loading chamber 6 |
| 9 | hydraulic wall actuator for pivoting the front wall 7 |
| 10 | control unit of the loader wagon 1 |
| 11 | pick-up unit |
| 12 | conveyor rotor, engages into the feeding channel 8 |
| 13 | crop material property sensor |
| 14 | motor for moving the scraper floor 5, serves as the conveyor drive |
| 15 | outlet of the feeding channel 8, serving as the inlet guiding into the loading chamber 6 |
| 16 | hydraulic pressure sensor for the front wall 7 |
| 17 | pivoting axis of the pivotal front wall 7 |
| CM | crop material in the loading chamber 6 |
| F | force applied onto the upper wall part 7c |
| P | pressure which the crop material CM in the loading chamber 6 applies onto the pivotal wall 7, measured by the pressure sensor 16 |
| T | data connection between the loader wagon control unit 10 and the control unit of the pulling tractor |
| TD | traveling direction of the loader wagon 1 |

## Claims

1. Agricultural vehicle (1) comprising
- a loading chamber (6) surrounded by several walls (5, 7),
- an inlet (15) guiding into the loading chamber (6),
- a conveyor (5),
- a conveyor drive (14) for moving the conveyor (5),
- a wall actuator (9),
- at least one sensor (13, 16),
wherein at least one wall (7) or at least one part of one wall of the loading chamber (6) is pivotal,
wherein the wall actuator (9) is arranged to pivot the pivotal wall (7) or pivotal wall part,
wherein the vehicle (1) is arranged to inject crop material (CM) in the loading chamber (6),
thereby causing that pressure (P) is applied onto the crop material (CM) in the loading chamber (6),
wherein the vehicle (1) is arranged
- to move crop material (CM) injected into the loading chamber (6) away from the inlet (15) by moving the conveyor (5) and
- to store the moved crop material (CM) in the loading chamber (6),
wherein the or every sensor (13, 16) is arranged to measure a value indicative of a parameter,
wherein the vehicle (1) is arranged to automatically reduce the pressure (P) which is applied onto the crop material (CM) in the loading chamber (6) depending on signals from the or at least one sensor (13, 16),
the or at least one sensor (13) is a crop material property sensor which is arranged to measure a value indicative of a property of crop material (CM) carried on board of the vehicle (1)
**characterized in that**
the vehicle (1) is arranged
- to activate the conveyor drive (14)
thereby reducing the applied pressure (P),
depending on the or at least one crop material property measured by the or at least one crop material property sensor (13) of the vehicle (1).

2. Agricultural vehicle according to claim 1, **characterised in that** wherein the vehicle (1) is also arranged
- to activate both the conveyor drive (14) and the wall actuator (9 thereby reducing the applied pressure (P),
depending on the or at least one crop material property
measured by the or one crop material property sensor (13) of the vehicle (1).

3. Agricultural vehicle according to claim 1 or claim 2,
**characterized in that**
the or at least one crop material property sensor (13) comprises or is implemented as a near-infrared spectroscopy (NIRS) sensor.

4. Agricultural vehicle according to any of claims 1 to 3,
**characterized in that**
the or at least one crop material property sensor is a dry matter sensor (13) which is arranged to measure a value indicative of the dry matter content of crop material (CM) carried on board of the vehicle (1) and
the vehicle (1) is arranged to automatically reduce the applied pressure (P) depending on the measured dry matter content measured by the dry matter sensor (13).

5. Agricultural vehicle according to one of the preceding claims,
**characterized in that**
the or at least one crop material property sensor is a moisture sensor (13) being arranged to measure a value indicative of the moisture of crop material (CM) carried on board of the vehicle (1) and
the vehicle (1) is arranged to automatically reduce the applied pressure (P) depending on the moisture measured by the or one moisture sensor (13).

6. Agricultural vehicle according to claim 5,
**characterized in that**
the moisture sensor (13) is arranged to measure a value indicative of the electrical resistance of the crop material (CM).

7. Agricultural vehicle according to one of the preceding claims,
**characterized in that**
the vehicle (1) is arranged to automatically reduce the applied pressure (P) triggered by the event that the pressure (P) which is applied onto the crop material (CM) in the loading chamber (6) reaches or exceeds a pressure threshold, wherein the vehicle (1) is arranged to automatically calculate the pressure threshold depending on the or at least one measured crop material property.

8. Agricultural vehicle according to claim 7,
**characterized in that**
the or one crop material property is the moisture and
the calculated pressure threshold is the smaller
the higher the measured moisture value is.

9. Agricultural vehicle according to one of the preceding claims,
**characterized in that**
the vehicle (1) comprises a pressure sensor (16)
which is arranged to measure a value indicative of the pressure (P) which is applied onto the crop material (CM) in the loading chamber (6),
wherein the vehicle (1) is arranged to automatically trigger the reduction of the pressure (P) applied onto the crop material (CM) depending
on the or at least one measured crop material property and
on the measured applied pressure (P).

10. Agricultural vehicle according to claim 9,
**characterized in that**
the pressure sensor (16) is arranged to measure the pressure (P) which the crop material (CM) applies onto one wall (7) or wall part of the loading chamber (6).

11. Agricultural vehicle according to one of the preceding claims,
**characterized in that**
the loading chamber (6) comprises a bottom (5),
wherein the or at least one pivotal wall (7) is pivotally mounted, thereby entirely being pivotal with respect to the bottom (5),
wherein the wall actuator (9) is connected with the entirely pivotal wall (7) and wherein the vehicle (1) is arranged to reduce the applied pressure (P) by performing or enabling a pivotal movement of the entirely pivotal wall (7).

12. Agricultural vehicle according to one of the preceding claims,
**characterized in that**
the wall actuator (9) being connected with the pivotal wall (7) is arranged to perform or to enable the pivotal movement of the pivotal wall (7) or wall part, thereby reducing the applied pressure (P),
triggered by the event that the pressure (P) applied onto the crop material (CM) in the loading chamber (6) exceeds a pressure threshold,
wherein the vehicle (1) is arranged to automatically calculate the pressure threshold depending on the or at least one measured crop material property.

13. Agricultural vehicle according to claim 12,
**characterized in that**
the wall actuator (9) is arranged to bias the pivotal wall (7) or wall part against the crop material (CM) in the loading chamber (6),
thereby increasing the applied pressure,
if the pressure (B) applied onto the crop material (CM) is below the pressure threshold.

14. Agricultural vehicle according to one of the preceding claims,
**characterized in that**
the vehicle (1) comprises a pressure sensor (16),
wherein the pressure sensor (16) is arranged to measure a value indicative of the pressure (P) which the crop material (CM) in the loading chamber (6) applies onto the pivotal wall (7) or pivotal wall part and
wherein the wall actuator (9) is arranged to perform or enable the pivotal movement of the wall (7) or wall part depending
on the or at least one measured crop material property and
on the signals from the measured applied pressure.

15. Agricultural vehicle according to one of the preceding claims,
**characterized in that**
the wall actuator (9) is arranged to pivot the pivotal wall (7) or wall part into a position
which depends on the or at least one measured crop material property.

16. Agricultural vehicle according to one of the preceding claims,
**characterized in that**
the vehicle (1) is arranged to activate the conveyor drive (14),
thereby causing the conveyor drive (14) to move the conveyor (5),
depending on the or at least one measured crop material property,
wherein the moved conveyor (5) is arranged to convey crop material (CM) contained in the loading chamber (6) away from the inlet (15),
thereby reducing the pressure (P) applied onto the crop material.

17. Agricultural vehicle according to claim 16,
**characterized in that**
the vehicle (1) is arranged to activate the conveyor drive (14),
thereby causing the conveyor (5) to reduce the applied pressure (P),
triggered by the event that the pressure (P) applied onto the crop material (CM) in the loading chamber (6) exceeds a pressure threshold,
wherein the vehicle (1) is arranged to automatically calculate the pressure threshold
depending on the or at least one measured crop material property.

18. Agricultural vehicle according to one of the preceding claims,
**characterized in that**
the or at least one crop material property sensor (13) is arranged to measure the value indicative of the crop material property
at a measuring location (12) on board of the vehicle (1) and
outside of the loading chamber (6).

19. Agricultural vehicle according to one of the preceding claims,
**characterized in that**
the vehicle comprises
a feeding channel (8) guiding towards the inlet (15), thereby guiding into the loading chamber (6) and
a channel conveying device (12),
wherein the channel conveying device (12) is arranged to convey crop material through the feeding channel (8) towards the loading chamber (6) and
wherein the crop material property sensor (13) is arranged to measure a value indicative of the property of the crop material (CM)
at a measuring location adjacent to the feeding channel (8).

20. Agricultural vehicle according to one of the preceding claims,
**characterized in that**
the vehicle (1) comprises a mass flow sensor
which is arranged to measure a value indicative of the mass flow of crop material (CM) through the inlet (15) into the loading chamber (6),
wherein the vehicle (1) is arranged to automatically reduce the pressure (P) applied onto the crop material (CM) in the loading chamber (6) depending
on the or at least one measured crop material property and
on the measured crop material mass flow.

21. Agricultural vehicle according to one of the preceding claims,
**characterized in that**
the vehicle (1) comprises or is at least temporarily in data connection with a geo-position sensor which is arranged to measure the current geo-position of the vehicle (1),
wherein the or one crop material property sensor
has at least temporarily access to a crop material property map which contains for different geo-positions the respective crop material property value at this geo-position and
is arranged to derive a crop material property value depending on the map and the measured current geo-position of the vehicle (1).

22. Method for storing crop material (CM) in a loading chamber (6) of an agricultural vehicle (1),
wherein the vehicle (1) comprises
an inlet (15) guiding into the loading chamber (6),
a conveyor (5),
a conveyor drive (14) for moving the conveyor (5), and
at least one sensor (13, 16),
wherein the loading chamber (6) is surrounded by several walls (5, 7),
wherein at least one wall (7) or at least one part of one wall of the loading chamber (6) is pivotal,
wherein the storing method comprises the steps that
crop material (CM) is injected through the inlet (15) into the loading chamber (6) and is stored in the loading chamber (6),
the injection of crop material (CM) causes at least temporarily the event that pressure (P) is applied onto the crop material (CM) in the loading chamber (6),
the or at least one sensor (13, 16) measures at least one time a value indicative of a parameter,
the drive (14) moves at least temporarily the conveyor (5) while or after crop material (CM) is injected, and
the moved conveyor (5) conveys crop material (CM) in the loading chamber (6) away from the inlet (15)
such that the conveyed crop material (CM) remains in the loading chamber (6) and wherein the further step is performed that
the vehicle (1) reduces at one time automatically the pressure (P) which is applied onto the crop material (CM) contained in the loading chamber (6) depending on signals from the or at least one sensor (13, 16),
the or at least one sensor (13) is a crop material property sensor,
wherein the step that the or at least one parameter is measured comprises the step that
the or at least one crop material property sensor (13) automatically measures a value indicative of a property of the crop material (CM) carried on board of the vehicle (1), and
wherein the or at least one step that the vehicle (1) reduces the applied pressure (P)
is automatically triggered depending on the or at least one measured crop material property **characterized in that**
the method comprises the step that
the conveyor drive (14) moves the conveyor (5) such that the conveyor (5) moves crop material (CM) away from the inlet (15).

23. Storing method according to claim 22, **characterised in that** it further comprises the step of
the wall actuator (9) pivots the pivotal wall (7) or pivotal wall part or enables such a pivotal movement.

24. Storing method according to either of claims 22 or 23,
**characterized in that**
the or one measured crop property is the dry matter content or the moisture,
the or at least one crop material property sensor (13) of the vehicle (1) is a dry matter sensor or a moisture sensor, and
the step that the or one crop material property sensor (13) measures a value indicative of a crop material property comprises the step that the crop material property sensor (13) measures a value indicative of the dry matter content or moisture of the crop material (CM) carried on board of the vehicle (1),
wherein the step that the vehicle (1) automatically reduces the applied pressure (P)
is automatically triggered depending on the measured dry matter content or moisture.

25. Storing method according to any of claims 22 to 24,
**characterized in that**
the vehicle (1) comprises a pressure sensor (16),
wherein the method comprises the further step that
the pressure sensor (16) measures a value indicative of the pressure (P) applied onto the crop material (CM) in the loading chamber (6) and
wherein the step that the vehicle (1) automatically reduces the applied pressure (P)
is triggered by the event that the measured pressure (P) exceeds a pressure threshold,
wherein the vehicle (1) automatically calculates the pressure threshold by using the or at least one measured value indicative of the or one crop material property.

26. Storing method according to one of the claims 22 to 25,
**characterized in that**
the loading chamber (6) comprises a bottom (5),
wherein the or at least one wall (7) is pivotally mounted such that the entire wall (7) is pivotal with respect to the bottom (5),
wherein the wall actuator (9) is connected with the entirely pivotal wall (7) and wherein at least one step of reducing the applied pressure (P) comprises the step that
the wall actuator (9) performs or enables a pivotal movement of the entirely pivotal wall (7)
such that the volume of the loading chamber (6) is increased,
thereby reducing the applied pressure (P),
depending on the or at least one measured crop material property.

27. Storing method according to one of the claims 22 to 26,
**characterized in that**
the vehicle (1) performs the step of automatically reducing the applied pressure (P) at least two times,
wherein every pressure reducing step is automatically triggered depending on the or one measured crop material property.

28. Storing method according to claim 27,
**characterized in that**
the or at least one pressure-reducing step comprises the steps that
the conveyor drive (14) is triggered,
the triggered conveyor drive (14) moves the conveyor (5), and
the moved conveyor (5) moves crop material (CM) away from the inlet (15) and
the or at least one further pressure-reducing step comprises the step that
the wall actuator (9) pivots the wall (7) or wall part or enables such a movement.

## Patentansprüche

1. Landwirtschaftliches Fahrzeug (1), mit
- einer von mehreren Wänden (5, 7) umgebenen Ladekammer (6),
- einem in die Ladekammer (6) führenden Einlass (15),
- einem Förderer (5),
- einem Fördererantrieb (14) zum Bewegen des Förderers (5),
- einem Wandaktuator (9),
- mindestens einem Sensor (13, 16),
wobei mindestens eine Wand (7) oder mindestens ein Teil einer Wand der Ladekammer (6) schwenkbar ist,
wobei der Wandaktuator (9) dazu eingerichtet ist, die schwenkbare Wand (7) oder den schwenkbaren Wandteil zu verschwenken,
wobei das Fahrzeug (1) dazu eingerichtet ist, Erntegutmaterial (CM) in die Ladekammer (6) einzuführen,
wodurch es bewirkt, dass Druck (P) auf das Erntegutmaterial (CM) in der Ladekammer (6) ausgeübt wird,
wobei das Fahrzeug (1) dazu eingerichtet ist,
- in die Ladekammer (6) eingeführtes Erntegutmaterial (CM) durch Bewegen des Förderers (5) weg von dem Einlass (15) zu bewegen und
- das bewegte Erntegutmaterial (CM) in der Ladekammer (6) einzulagern,
wobei der oder jeder Sensor (13, 16) dazu eingerichtet ist, einen Wert zu messen, der einen Parameter anzeigt,
wobei das Fahrzeug (1) dazu eingerichtet ist, automatisch den Druck (P) zu reduzieren, der auf das Erntegutmaterial (CM) in der Ladekammer (6) ausgeübt wird,
in Abhängigkeit von Signalen von dem oder mindestens einem Sensor (13, 16),
wobei der oder mindestens ein Sensor (13) ein Erntegutmaterialeigenschaftssensor ist,
der dazu eingerichtet ist, einen Wert zu messen, der eine Eigenschaft von an Bord des Fahrzeugs (1) befördertem Erntegutmaterial (CM) anzeigt, **dadurch gekennzeichnet, dass** das Fahrzeug (1) dazu eingerichtet ist,
- den Fördererantrieb (14) zu aktivieren
und so den ausgeübten Druck (P) zu reduzieren,
in Abhängigkeit von der oder mindestens einer Erntegutmaterialeigenschaft,
die von dem oder mindestens einem Erntegutmaterialeigenschaftssensor (13) des Fahrzeugs (1) gemessen wird.

2. Landwirtschaftliches Fahrzeug nach Anspruch 1, **dadurch gekennzeichnet, dass** das Fahrzeug (1) auch dazu eingerichtet ist,
- sowohl den Fördererantrieb (14) als auch den Wandaktuator (9) zu aktivieren,
wodurch es den ausgeübten Druck (P) reduziert,
in Abhängigkeit von der oder mindestens einer Erntegutmaterialeigenschaft,
die von dem oder mindestens einem Erntegutmaterialeigenschaftssensor (13) des Fahrzeugs (1) gemessen wird.

3. Landwirtschaftliches Fahrzeug nach Anspruch 1 oder Anspruch 2, **dadurch gekennzeichnet, dass**
der oder mindestens ein Erntegutmaterialeigenschaftssensor (13) einen Nah-Infrarot-Spektroskopie-Sensor (NIRS-Sensor) aufweist oder als solcher implementiert ist.

4. Landwirtschaftliches Fahrzeug nach mindestens einem der Ansprüche 1 bis 3, **dadurch gekennzeichnet, dass**
der oder mindestens ein Erntegutmaterialeigenschaftssensor ein Trockenmassensensor (13) ist, der dazu eingerichtet ist, einen Wert zu messen, der den Trockenmasseanteil von an Bord des Fahrzeugs (1) befördertem Erntegutmaterial (CM) anzeigt, und
das Fahrzeug (1) dazu eingerichtet ist, den ausgeübten Druck (P) automatisch zu reduzieren,
in Abhängigkeit von dem durch den Trockenmassensensor (13) gemessenen Trockenmasseanteil.

5. Landwirtschaftliches Fahrzeug nach mindestens einem der vorhergehenden Ansprüche, **dadurch gekennzeichnet, dass**
der oder mindestens ein Erntegutmaterialeigenschaftssensor ein Feuchtigkeitssensor (13) ist, der dazu eingerichtet ist, einen Wert zu messen, der eine Feuchtigkeit von an Bord des Fahrzeugs (1) befördertem Erntegutmaterial (CM) anzeigt, und
das Fahrzeug (1) dazu eingerichtet ist, automatisch den ausgeübten Druck (P) zu reduzieren,
in Abhängigkeit von der durch den oder einen Feuchtigkeitssensor (13) gemessenen Feuchtigkeit.

6. Landwirtschaftliches Fahrzeug nach Anspruch 5, **dadurch gekennzeichnet, dass** der Feuchtigkeitssensor (13) dazu eingerichtet ist, einen Wert zu messen, der den elektrischen Widerstand des Erntegutmaterials (CM) anzeigt.

7. Landwirtschaftliches Fahrzeug nach mindestens einem der vorhergehenden Ansprüche, **dadurch gekennzeichnet, dass**
das Fahrzeug (1) dazu eingerichtet ist, automatisch den ausgeübten Druck (P) zu reduzieren, ausgelöst durch das Ereignis, dass der auf das Erntegutmaterial (CM) in der Ladekammer (6) ausgeübte Druck (P) eine Druckschwelle erreicht oder überschreitet,
wobei das Fahrzeug (1) dazu eingerichtet ist, automatisch die Druckschwelle in Abhängigkeit von der oder mindestens einer gemessenen Erntegutmaterialeigenschaft zu berechnen.

8. Landwirtschaftliches Fahrzeug nach Anspruch 7, **dadurch gekennzeichnet, dass** die oder eine Erntegutmaterialeigenschaft die Feuchtigkeit ist und
die berechnete Druckschwelle umso kleiner ist,
je höher der gemessene Feuchtigkeitswert ist.

9. Landwirtschaftliches Fahrzeug nach mindestens einem der vorhergehenden Ansprüche, **dadurch gekennzeichnet, dass**
das Fahrzeug (1) einen Drucksensor (16) aufweist,
der dazu eingerichtet ist, einen Wert zu messen, der den auf das Erntegutmaterial (CM) in der Ladekammer (6) ausgeübten Druck (P) anzeigt,
wobei das Fahrzeug (1) dazu eingerichtet ist, automatisch die Reduktion des auf das Erntegutmaterial (CM) ausgeübten Drucks (P) auszulösen, in Abhängigkeit
von der oder mindestens einer gemessenen Erntegutmaterialeigenschaft und
dem gemessenen ausgeübten Druck (P).

10. Landwirtschaftliches Fahrzeug nach Anspruch 9, **dadurch gekennzeichnet, dass** der Drucksensor (16) dazu eingerichtet ist, den Druck (P) zu messen, den das Erntegutmaterial (CM) auf die eine Wand (7) oder den einen Wandteil der Ladekammer (6) ausübt.

11. Landwirtschaftliches Fahrzeug nach mindestens einem der vorhergehenden Ansprüche, **dadurch gekennzeichnet, dass**
die Ladekammer (6) einen Boden (5) aufweist,
wobei die oder mindestens eine schwenkbare Wand (7) schwenkbar befestigt ist, womit sie relativ zu dem Boden (5) vollständig schwenkbar ist,
wobei der Wandaktuator (9) mit der vollständig schwenkbaren Wand (7) verbunden ist und wobei das Fahrzeug (1) dazu eingerichtet ist, den ausgeübten Druck (P) durch Ausführen oder Ermöglichen einer Schwenkbewegung der vollständig schwenkbaren Wand (7) zu reduzieren.

12. Landwirtschaftliches Fahrzeug nach mindestens einem der vorhergehenden Ansprüche, **dadurch gekennzeichnet, dass**
der mit der schwenkbaren Wand (7) verbundene Wandaktuator (9) dazu eingerichtet ist, die Schwenkbewegung der schwenkbaren Wand (7) oder des schwenkbaren Wandteils auszuführen oder zu ermöglichen,
wodurch er den ausgeübten Druck (P) reduziert,
ausgelöst durch das Ereignis, dass der auf das Erntegutmaterial (CM) in der Ladekammer (6) ausgeübte Druck (P) eine Druckschwelle überschreitet,
wobei das Fahrzeug (1) dazu eingerichtet ist, die Druckschwelle automatisch in Abhängigkeit von der oder mindestens einer gemessenen Erntegutmaterialeigenschaft zu berechnen.

13. Landwirtschaftliches Fahrzeug nach Anspruch 12, **dadurch gekennzeichnet, dass** der Wandaktuator (9) dazu eingerichtet ist, die schwenkbare Wand (7) oder den schwenkbaren Wandteil gegen das Erntegutmaterial (CM) in der Ladekammer (6) zu beaufschlagen,
wodurch er den ausgeübten Druck erhöht,
wenn der auf das Erntegutmaterial (CM) ausgeübte Druck (B) unterhalb der Druckschwelle liegt.

14. Landwirtschaftliches Fahrzeug nach mindestens einem der vorhergehenden Ansprüche, **dadurch gekennzeichnet, dass**
das Fahrzeug (1) einen Drucksensor (16) aufweist,
wobei der Drucksensor (16) dazu eingerichtet ist, einen Wert zu messen, der den Druck (P) anzeigt, den das Erntegutmaterial (CM) in der Ladekammer (6) auf die schwenkbare Wand (7) oder den schwenkbaren Wandteil ausübt, und
wobei der Wandaktuator (9) dazu eingerichtet ist, die Schwenkbewegung der Wand (7) oder des Wandteils auszuführen oder zu ermöglichen, in Abhängigkeit
von der oder mindestens einer gemessenen Erntegutmaterialeigenschaft und
von den Signalen des gemessenen ausgeübten Drucks.

15. Landwirtschaftliches Fahrzeug nach mindestens einem der vorhergehenden Ansprüche, **dadurch gekennzeichnet, dass**
der Wandaktuator (9) dazu angeordnet ist, die schwenkbare Wand (7) oder den schwenkbaren Wandteil in eine Position zu verschwenken,
die von der oder mindestens einer gemessenen Erntegutmaterialeigenschaft abhängt.

16. Landwirtschaftliches Fahrzeug nach mindestens einem der vorhergehenden Ansprüche, **dadurch gekennzeichnet, dass**
das Fahrzeug (1) dazu eingerichtet ist, den Fördererantrieb (14) zu aktivieren, wodurch es bewirkt, dass der Fördererantrieb (14) den Förderer (5) bewegt,
in Abhängigkeit von der oder mindestens einer gemessenen Erntegutmaterialeigenschaft, wobei der bewegte Förderer (5) dazu eingerichtet ist, in der Ladekammer (6) enthaltenes Erntegutmaterial (CM) weg von dem Einlass (15) zu bewegen,
wodurch der auf das Erntegutmaterial ausgeübte Druck (P) reduziert wird.

17. Landwirtschaftliches Fahrzeug nach Anspruch 16, **dadurch gekennzeichnet, dass** das Fahrzeug (1) dazu eingerichtet ist, den Fördererantrieb (14) zu aktivieren,
wodurch es bewirkt, dass der Förderer (5) den ausgeübten Druck (P) reduziert,
ausgelöst durch das Ereignis, dass der auf das Erntegutmaterial (CM) in der Ladekammer (6) ausgeübte Druck (P) eine Druckschwelle überschreitet,
wobei das Fahrzeug (1) dazu eingerichtet ist, automatisch die Druckschwelle zu berechnen,
in Abhängigkeit von der oder mindestens einer gemessenen Erntegutmaterialeigenschaft.

18. Landwirtschaftliches Fahrzeug nach mindestens einem der vorhergehenden Ansprüche, **dadurch gekennzeichnet, dass**
der oder mindestens ein Erntegutmaterialeigenschaftssensor (13) dazu eingerichtet ist, den Wert zu messen, der die Erntegutmaterialeigenschaft anzeigt,
an einer Messposition (12) an Bord des Fahrzeugs (1) und
außerhalb der Ladekammer (6).

19. Landwirtschaftliches Fahrzeug nach mindestens einem der vorhergehenden Ansprüche, **dadurch gekennzeichnet, dass**
das Fahrzeug Folgendes aufweist:
einen Zuführkanal (8), der in Richtung auf den Einlass (15) führt und auf diese Weise in die Ladekammer (6) führt, und
eine Kanalfördervorrichtung (12),
wobei die Kanalfördervorrichtung (12) dazu eingerichtet ist, Erntegutmaterial durch den Zuführkanal (8) in Richtung auf die Ladekammer (6) zu bewegen, und
wobei der Erntegutmaterialeigenschaftssensor (13) dazu eingerichtet ist, einen Wert zu messen, der eine Eigenschaft des Erntegutmaterials (CM) anzeigt,
an einer an den Zuführkanal (8) angrenzenden Messposition.

20. Landwirtschaftliches Fahrzeug nach mindestens einem der vorhergehenden Ansprüche, **dadurch gekennzeichnet, dass**
das Fahrzeug (1) einen Massenflusssensor aufweist,
der dazu eingerichtet ist, einen Wert zu messen, der einen Massenfluss von Erntegutmaterial (CM) durch den Einlass (15) in die Ladekammer (6) anzeigt,
wobei das Fahrzeug (1) dazu eingerichtet ist, automatisch den auf das Erntegutmaterial (CM) in der Ladekammer (6) ausgeübten Druck (P) zu reduzieren, in Abhängigkeit von der oder mindestens einer gemessenen Erntegutmaterialeigenschaft und
von dem gemessenen Erntegutmaterialmassenfluss.

21. Landwirtschaftliches Fahrzeug nach mindestens einem der vorhergehenden Ansprüche, **dadurch gekennzeichnet, dass**
das Fahrzeug (1) einen Geopositionssensor aufweist oder mit einem Geopositionssensor wenigstens zeitweise in Datenverbindung steht, der dazu eingerichtet ist, die aktuelle Geoposition des Fahrzeugs (1) zu messen,
wobei der oder ein Erntegutmaterialeigenschaftssensor
mindestens zeitweise Zugriff auf eine Erntegutmaterialeigenschaftskarte hat, die für verschiedene Geopositionen den jeweiligen Erntegutmaterialeigenschaftswert an dieser Geoposition enthält, und
dazu eingerichtet ist, einen Erntegutmaterialeigenschaftswert in Abhängigkeit von der Karte und der gemessenen aktuellen Geoposition des Fahrzeugs (1) zu ermitteln.

22. Verfahren zum Einlagern von Erntegutmaterial (CM) in einer Ladekammer (6) eines landwirtschaftlichen Fahrzeugs (1),
wobei das Fahrzeug (1) Folgendes aufweist:
einen in die Ladekammer (6) führenden Einlass (15),
einen Förderer (5),
einen Fördererantrieb (14) zum Bewegen des Förderers (5) und
mindestens einen Sensor (13, 16),
wobei die Ladekammer (6) von mehreren Wänden (5, 7) umgeben ist,
wobei mindestens eine Wand (7) oder mindestens ein Teil einer Wand der Ladekammer (6) schwenkbar ist,
wobei das Einlagerverfahren die folgenden Schritte aufweist:
Erntegutmaterial (CM) wird durch den Einlass (15) in die Ladekammer (6) eingeführt und wird in der Ladekammer (6) eingelagert,
das Einführen von Erntegutmaterial (CM) löst mindestens zeitweise das Ereignis aus, dass Druck (P) auf das Erntegutmaterial (CM) in der Ladekammer (6) ausgeübt wird,
der oder mindestens ein Sensor (13, 16) misst mindestens einmal einen Wert, der einen Parameter anzeigt,
der Antrieb (14) bewegt den Förderer (5) mindestens zeitweise, während oder nachdem Erntegutmaterial (CM) eingeführt wird, und
der bewegte Förderer (5) fördert Erntegutmaterial (CM) in der Ladekammer (6) von dem Einlass (15) weg,
sodass das geförderte Erntegutmaterial (CM) in der Ladekammer (6) verbleibt,
und wobei der weitere Schritt ausgeführt wird, dass
das Fahrzeug (1) zu einem Zeitpunkt automatisch den auf das in der Ladekammer (6) enthaltene Erntegutmaterial (CM) ausgeübten Druck (P) reduziert,
in Abhängigkeit von Signalen von dem oder mindestens einem Sensor (13, 16),
wobei der oder mindestens ein Sensor (13) ein Erntegutmaterialeigenschaftssensor ist,
wobei der Schritt, dass der oder mindestens ein Parameter gemessen wird, den Schritt aufweist, dass
der oder mindestens ein Erntegutmaterialeigenschaftssensor (13) automatisch einen Wert misst, der eine Eigenschaft des an Bord des Fahrzeugs (1) beförderten Erntegutmaterials (CM) anzeigt, wobei der oder mindestens ein Schritt, dass das Fahrzeug (1) den ausgeübten Druck (P) reduziert,
automatisch in Abhängigkeit von der oder mindestens einer gemessenen Erntegutmaterialeigenschaft ausgelöst wird, **dadurch gekennzeichnet, dass**
das Verfahren den Schritt aufweist, dass
der Fördererantrieb (14) den Förderer (5) so bewegt, dass der Förderer (5) Erntegutmaterial (CM) von dem Einlass (15) weg bewegt.

23. Einlagerverfahren nach Anspruch 22, **dadurch gekennzeichnet, dass** es weiterhin den Schritt aufweist,
dass der Wandaktuator (9) die schwenkbare Wand (7) oder den schwenkbaren Wandteil verschwenkt oder solch eine Schwenkbewegung ermöglicht.

24. Einlagerverfahren nach mindestens einem der Ansprüche 22 und 23, **dadurch gekennzeichnet, dass**
die oder eine gemessene Ernteguteigenschaft der Trockenmassenanteil oder die Feuchtigkeit ist,
der oder mindestens ein Erntegutmaterialeigenschaftssensor (13) des Fahrzeugs (1) ein Trockenmassensensor oder ein Feuchtigkeitssensor ist und
der Schritt, dass der oder ein Erntegutmaterialeigenschaftssensor (13) einen Wert misst, der eine Erntegutmaterialeigenschaft anzeigt, den Schritt aufweist, dass
der Erntegutmaterialeigenschaftssensor (13) einen Wert misst, der den Trockenmasseanteil oder die Feuchtigkeit des an Bord des Fahrzeugs (1) beförderten Erntegutmaterials (CM) anzeigt, wobei der Schritt, dass das Fahrzeug (1) automatisch den ausgeübten Druck (P) reduziert, automatisch in Abhängigkeit von dem gemessenen Trockenmasseanteil oder der gemessenen Feuchtigkeit ausgelöst wird.

25. Einlagerverfahren nach mindestens einem der Ansprüche 22 bis 24, **dadurch gekennzeichnet, dass**
das Fahrzeug (1) einen Drucksensor (16) aufweist,
wobei das Verfahren den weiteren Schritt aufweist, dass
der Drucksensor (16) einen Wert misst, der den auf das Erntegutmaterial (CM) in der Ladekammer (6) ausgeübten Druck (P) anzeigt, und
wobei der Schritt, dass das Fahrzeug (1) automatisch den ausgeübten Druck (P) reduziert, durch das Ereignis ausgelöst wird, dass der gemessene Druck (P) eine Druckschwelle überschreitet,
wobei das Fahrzeug (1) automatisch die Druckschwelle berechnet,
indem es den oder mindestens einen gemessenen Wert, der die oder eine Erntegutmaterialeigenschaft anzeigt, nutzt.

26. Einlagerverfahren nach mindestens einem der Ansprüche 22 bis 25, **dadurch gekennzeichnet, dass**
die Ladekammer (6) einen Boden (5) aufweist,
wobei die oder mindestens eine Band (7) schwenkbar montiert ist, sodass die Wand (7) relativ zu dem Boden (5) vollständig schwenkbar ist,
wobei der Wandaktuator (9) mit der vollständig schwenkbaren Wand (7) verbunden ist und wobei mindestens ein Schritt des Reduzierens des ausgeübten Drucks (P) den Schritt aufweist, dass
der Wandaktuator (9) eine Schwenkbewegung der vollständig schwenkbaren Wand (7) ausführt oder ermöglicht,
sodass das Volumen der Ladekammer (6) vergrößert wird,
wodurch der ausgeübte Druck (P) reduziert wird,
in Abhängigkeit von der oder mindestens einer gemessenen Erntegutmaterialeigenschaft.

27. Einlagerverfahren nach mindestens einem der Ansprüche 22 bis 26, **dadurch gekennzeichnet, dass**
das Fahrzeug (1) den Schritt des automatischen Reduzierens des ausgeübten Drucks (P) mindestens zweimal ausführt,
wobei jeder Druckreduktionsschritt automatisch in Abhängigkeit von der oder einer gemessenen Erntegutmaterialeigenschaft ausgelöst wird.

28. Einlagerverfahren nach Anspruch 27, **dadurch gekennzeichnet, dass** der oder mindestens ein Druckreduktionsschritt die Schritte aufweist, dass der Fördererantrieb (14) ausgelöst wird,
der ausgelöste Fördererantrieb (14) den Förderer (5) bewegt und
der bewegte Förderer (5) Erntegutmaterial (CM) weg von dem Einlass (15) bewegt und
der weitere oder mindestens ein weiterer Druckreduktionsschritt den Schritt aufweist, dass der Wandaktuator (9) die Wand (7) oder den Wandteil verschwenkt oder solch eine Bewegung ermöglicht.

## Revendications

1. Véhicule agricole (1) comprenant :
un compartiment de chargement (6) entouré par plusieurs parois (5, 7),
une entrée (15) conduisant dans le compartiment de chargement (6),
un convoyeur (5),
un dispositif d'entraînement de convoyeur (14) destiné à déplacer le convoyeur (5),
un actionneur de paroi (9),
au moins un capteur (13, 16),
dans lequel au moins une paroi (7) ou au moins une partie d'une paroi du compartiment de chargement (6) peut pivoter,
dans lequel l'actionneur de paroi (9) est agencé de manière à faire pivoter la paroi pouvant pivoter (7) ou partie de paroi pouvant pivoter,
dans lequel le véhicule (1) est agencé de manière à injecter le matériau de récolte (CM) dans le compartiment de chargement (6),
provoquant ainsi l'application d'une pression (P) sur le matériau de récolte (CM) dans le compartiment de chargement (6),
dans lequel le véhicule (1) est agencé :
de manière à écarter le matériau de récolte (CM) injecté dans le compartiment de chargement (6) de l'entrée (15) en déplaçant le convoyeur (5) et
à stocker le matériau de récolte déplacé (CM) dans le compartiment de chargement (6),
dans lequel le ou chaque capteur (13, 16) est agencé afin de mesurer une valeur indicative d'un paramètre,
dans lequel le véhicule (1) est agencé afin de réduire automatiquement la pression (P) qui est appliquée sur le matériau de récolte (CM) dans le compartiment de chargement (6) en fonction des signaux du ou d'au moins un capteur (13, 16),
le ou au moins un capteur (13) est un capteur de propriété de matériau de récolte qui est agencé afin de mesurer une valeur indicative d'une propriété de matériau de récolte (CM) contenu à bord du véhicule (1)
**caractérisé en ce que**
le véhicule (1) est agencé
afin d'activer le dispositif d'entraînement de convoyeur (14),
réduisant ainsi la pression (P) appliquée,
en fonction de la ou d'au moins une propriété du matériau de récolte mesurée par le ou au moins un capteur de propriété de matériau de récolte (13) du véhicule (1).

2. Véhicule agricole selon la revendication 1, **caractérisé en ce que** le véhicule (1) est aussi agencé
afin d'activer à la fois le dispositif d'entraînement de convoyeur (14) et l'actionneur de paroi (9), réduisant ainsi la pression (P) appliquée,
en fonction de la ou d'au moins une propriété de matériau de récolte mesurée par le ou un capteur de propriété de matériau de récolte (13) du véhicule (1).

3. Véhicule agricole selon la revendication 1 ou 2,
**caractérisé en ce que**
le ou au moins un capteur de propriété de matériau de récolte (13) comprend ou est mis en oeuvre comme un capteur de spectroscopie en proche infrarouge (NIRS).

4. Véhicule agricole selon l'une quelconque des revendications 1 à 3, **caractérisé en ce que**
le ou au moins un capteur de propriété de matériau de récolte est un capteur de matière sèche (13) qui est agencé afin de mesurer une valeur indicative de la teneur en matière sèche du matériau de récolte (CM) contenu à bord du véhicule (1) et
le véhicule (1) est agencé afin de réduire automatiquement la pression (P) appliquée en fonction de la teneur en matière sèche mesurée, mesurée par le capteur de matière sèche (13).

5. Véhicule agricole selon l'une des revendications précédentes,
**caractérisé en ce que**
le ou au moins un capteur de propriété de matériau de récolte est un capteur d'humidité (13) qui est agencé afin de mesurer une valeur indicative de l'humidité du matériau de récolte (CM) contenu à bord du véhicule (1) et
le véhicule (1) est agencé afin de réduire automatiquement la pression (P) appliquée en fonction de l'humidité mesurée par le ou un capteur d'humidité (13).

6. Véhicule agricole selon la revendication 5,
**caractérisé en ce que**
le capteur d'humidité (13) est agencé afin de mesurer une valeur indicative de la résistance électrique du matériau de récolte (CM).

7. Véhicule agricole selon l'une des revendications précédentes,
**caractérisé en ce que**
le véhicule (1) est agencé afin de réduire automatiquement la pression (P) appliquée, ce qui est déclenché par l'événement dans lequel la pression (P) qui est appliquée sur le matériau de récolte (CM) dans le compartiment de chargement (6) atteint ou excède un seuil de pression,
dans lequel le véhicule (1) est agencé afin de calculer automatiquement le seuil de pression en fonction de la ou d'au moins une propriété de matériau de récolte mesurée.

8. Véhicule agricole selon la revendication 7,
**caractérisé en ce que**
la ou une propriété du matériau de récolte est l'humidité et
le seuil de pression calculé est plus faible à mesure que la valeur d'humidité mesurée est plus élevée.

9. Véhicule agricole selon l'une des revendications précédentes,
**caractérisé en ce que**
le véhicule (1) comprend un capteur de pression (16)
qui est agencé afin de mesurer une valeur indicative de la pression (P) qui est appliquée sur le matériau de récolte (CM) dans le compartiment de chargement (6),
dans lequel le véhicule (1) est agencé afin de déclencher automatiquement la réduction de la pression (P) appliquée sur le matériau de récolte (CM) en fonction de la ou d'au moins une propriété du matériau de récolte mesurée et
de la pression appliquée mesurée (P).

10. Véhicule agricole selon la revendication 9,
**caractérisé en ce que**
la capteur de pression (16) est agencé afin de mesurer la pression (P) que le matériau de récolte (CM) applique sur une paroi (7) ou partie de paroi du compartiment de chargement (6).

11. Véhicule agricole selon l'une des revendications précédentes,
**caractérisé en ce que**
le compartiment de chargement (6) comprend une partie inférieure (5),
dans lequel la ou au moins une paroi pivotante (7) est montée de manière à pivoter, pouvant ainsi pivoter entièrement par rapport à la partie inférieure (5),
dans lequel l'actionneur de paroi (9) est relié à la paroi entièrement pivotante (7) et dans lequel le véhicule (1) est agencé afin de réduire la pression (P) appliquée en réalisant ou en autorisant un mouvement pivotant de la paroi entièrement pivotante (7).

12. Véhicule agricole selon l'une des revendications précédentes,
**caractérisé en ce que**
l'actionneur de paroi (9) étant relié à la paroi pivotante (7) est agencé afin d'exécuter ou d'autoriser le mouvement pivotant de la paroi pivotante (7) ou de la partie de paroi,
réduisant ainsi la pression (P) appliquée,
ce qui est déclenché par l'événement dans lequel la pression (P) appliquée sur le matériau de récolte (CM) dans le compartiment de chargement (6) excède un seuil de pression,
dans lequel le véhicule (1) est agencé afin de calculer automatiquement le seuil de pression en fonction de la ou d'au moins une propriété de matériau de récolte mesurée.

13. Véhicule agricole selon la revendication 12,
**caractérisé en ce que**
l'actionneur de paroi (9) est agencé afin d'appliquer la paroi pivotante (7) ou la partie de paroi contre le matériau de récolte (CM) dans le compartiment de chargement (6),
augmentant ainsi la pression appliquée,
si la pression (B) appliquée sur le matériau de récolte (CM) est inférieure au seuil de pression.

14. Véhicule agricole selon l'une des revendications précédentes,
**caractérisé en ce que**
le véhicule (1) comprend un capteur de pression (16),
dans lequel le capteur de pression (16) est agencé afin de mesurer une valeur indicative de la pression (P) que le matériau de récolte (CM) dans le compartiment de chargement (6) applique sur la paroi pivotante (7) ou partie de paroi pivotante et
dans lequel l'actionneur de paroi (9) est agencé afin d'exécuter ou d'autoriser le mouvement pivotant de la paroi (7) ou partie de paroi en fonction de la ou d'au moins une propriété du matériau de récolte mesurée et
des signaux à partir de la pression appliquée mesurée.

15. Véhicule agricole selon l'une des revendications précédentes,
**caractérisé en ce que**
l'actionneur de paroi (9) est agencé afin de faire pivoter la paroi pivotante (7) ou partie de paroi dans une position qui dépend de la ou d'au moins une propriété de matériau de récolte mesurée.

16. Véhicule agricole selon l'une des revendications précédentes,
**caractérisé en ce que**
le véhicule (1) est agencé afin d'activer le dispositif d'entraînement de convoyeur (14),
provoquant ainsi le déplacement par le dispositif d'entraînement de convoyeur (14) du convoyeur (5), en fonction de la ou d'au moins une propriété du matériau de récolte mesurée,
dans lequel le convoyeur (5) déplacé est agencé afin de transférer le matériau de récolte (CM) contenu dans le compartiment de chargement (6) à l'écart de l'entrée (15),
réduisant ainsi la pression (P) appliquée sur le matériau de récolte.

17. Véhicule agricole selon la revendication 16,
**caractérisé en ce que**
le véhicule (1) est agencé afin d'activer le dispositif d'entraînement de convoyeur (14),
amenant ainsi le convoyeur (5) à réduire la pression (P) appliquée,
ce qui est déclenché par l'événement dans lequel la pression (P) appliquée sur le matériau de récolte (CM) dans le compartiment de chargement (6) excède un seuil de pression,
dans lequel le véhicule (1) est agencé afin de calculer automatiquement le seuil de pression en fonction de la ou d'au moins une propriété de matériau de récolte mesurée.

18. Véhicule agricole selon l'une des revendications précédentes,
**caractérisé en ce que**
le ou au moins un capteur de propriété de matériau de récolte (13) est agencé afin de mesurer la valeur indicative de la propriété de matériau de récolte à un emplacement de mesure (12) à bord du véhicule (1) et
à l'extérieur du compartiment de chargement (6).

19. Véhicule agricole selon l'une des revendications précédentes,
**caractérisé en ce que**
le véhicule comprend
un canal d'alimentation (8) assurant le guidage vers l'entrée (15), conduisant ainsi dans le compartiment de chargement (6) et
un dispositif de transfert de canal (12),
dans lequel le dispositif de transfert de canal (12) est agencé afin de transférer le matériau de récolte à travers le canal d'alimentation (8) vers le compartiment de chargement (6) et
dans lequel le capteur de propriété de matériau de récolte (13) est agencé afin de mesurer une valeur indicative de la propriété du matériau de récolte (CM)
à un emplacement de mesure adjacent au canal d'alimentation (8).

20. Véhicule agricole selon l'une des revendications précédentes,
**caractérisé en ce que**
le véhicule (1) comprend un capteur de débit massique qui est agencé afin de mesurer une valeur indicative du débit massique du matériau de récolte (CM) à travers l'entrée (15) dans le compartiment de chargement (6),
dans lequel le véhicule (1) est agencé afin de réduire automatiquement la pression (P) appliquée sur le matériau de récolte (CM) dans le compartiment de chargement (6) en fonction de la ou d'au moins une propriété du matériau de récolte mesurée et du débit massique de matériau de récolte mesuré.

21. Véhicule agricole selon l'une des revendications précédentes,
**caractérisé en ce que**
le véhicule (1) comprend, ou est au moins temporairement en liaison numérique avec, un capteur de position géographique qui est agencé afin de mesurer la position géographique courante du véhicule (1),
dans lequel le ou un capteur de propriété de matériau de récolte dispose au moins temporairement d'un accès à une carte de propriété de matériau de récolte qui contient, pour différentes positions géographiques, la valeur de propriété du matériau de récolte respective à cette position géographique et
est agencé afin de déduire une valeur de propriété du matériau de récolte en fonction de la carte et de la position géographique courante mesurée du véhicule (1).

22. Procédé de stockage de matériau de récolte (CM) dans un compartiment de chargement (6) d'un véhicule agricole (1),
dans lequel le véhicule (1) comprend
une entrée (15) conduisant dans le compartiment de chargement (6),
un convoyeur (5),
un dispositif d'entraînement de convoyeur (14) destiné à déplacer le convoyeur (5), et
au moins un capteur (13, 16), 7),
dans lequel le compartiment de chargement (6) est entouré par plusieurs parois (5,
dans lequel au moins une paroi (7) ou au moins une partie d'une paroi du compartiment de chargement (6) peut pivoter,
dans lequel le procédé de stockage comprend les étapes dans lesquelles
le matériau de récolte (CM) est injecté à travers l'entrée (15) dans le compartiment de chargement (6) et est stocké dans le compartiment de chargement (6),
l'injection du matériau de récolte (CM) conduit au moins temporairement à l'événement dans lequel une pression (P) est appliquée sur le matériau de récolte (CM) dans le compartiment de chargement (6),
le ou au moins un capteur (13, 16) mesure au moins une fois une valeur indicative d'un paramètre,
le dispositif d'entraînement (14) déplace au moins temporairement le convoyeur (5) pendant que le matériau de récolte (CM) est injecté ou après qu'il l'a été, et
le convoyeur déplacé (5) transfère le matériau de récolte (CM) dans le compartiment de chargement (6) à l'écart de l'entrée (15)
de telle sorte que le matériau de récolte (CM) transféré reste dans le compartiment de chargement (6)
et dans lequel l'étape supplémentaire est exécutée, dans laquelle le véhicule (1) réduit dans un premier temps de manière automatique la pression (P) qui est appliquée sur le matériau de récolte (CM) contenu dans le compartiment de chargement (6) en fonction des signaux du ou d'au moins un capteur (13, 16),
le ou au moins un capteur (13) est un capteur de propriété de matériau de récolte, dans lequel l'étape dans laquelle le ou au moins un paramètre est mesuré comprend l'étape dans laquelle
le ou au moins un capteur de propriété de matériau de récolte (13) mesure automatiquement une valeur indicative d'une propriété du matériau de récolte (CM) contenu à bord du véhicule (1), et
dans lequel la ou au moins une étape dans laquelle le véhicule (1) réduit la pression (P) appliquée est automatiquement déclenchée en fonction de la ou d'au moins une propriété de matériau de récolte mesurée, **caractérisé en ce que**
le procédé comprend l'étape dans laquelle
le dispositif d'entraînement de convoyeur (14) déplace le convoyeur (5) de telle sorte que le convoyeur (5) déplace le matériau de récolte (CM) à l'écart de l'entrée (15).

23. Procédé de stockage selon la revendication 22, **caractérisé en ce qu'**il comprend, en outre, l'étape de pivotement,
par l'actionneur de paroi (9), de la paroi pivotante (7) ou la partie de paroi pivotante ou d'autorisation d'un tel mouvement de pivotement.

24. Procédé de stockage selon les revendications 22 ou 23,
**caractérisé en ce que**
la ou une propriété de récolte mesurée est la teneur en matière sèche ou l'humidité, le ou au moins un capteur de propriété de matériau de récolte (13) du véhicule (1) est un capteur de matière sèche ou un capteur d'humidité, et
l'étape dans laquelle le ou un capteur de propriété de matériau de récolte (13) mesure une valeur indicative d'une propriété du matériau de récolte comprend l'étape dans laquelle
le capteur de propriété de matériau de récolte (13) mesure une valeur indicative de la teneur en matière sèche ou l'humidité du matériau de récolte (CM) contenu à bord du véhicule (1),
dans lequel l'étape dans laquelle le véhicule (1) réduit automatiquement la pression (P) appliquée est déclenché automatiquement en fonction du contenu en matière sèche ou de l'humidité mesuré.

25. Procédé de stockage selon l'une quelconque des revendications 22 à 24,
**caractérisé en ce que**
le véhicule (1) comprend un capteur de pression (16),
dans lequel le procédé comprend l'étape supplémentaire dans laquelle
le capteur de pression (16) mesure une valeur indicative de la pression (P) appliquée sur le matériau de récolte (CM) dans le compartiment de chargement (6) et
dans lequel l'étape dans laquelle le véhicule (1) réduit automatiquement la pression (P) appliquée est déclenchée par l'événement dans lequel la pression (P) mesurée excède un seuil de pression,
dans lequel le véhicule (1) calcule automatiquement le seuil de pression en utilisant la ou au moins une valeur indicative de la ou d'une propriété de matériau de récolte mesurée.

26. Procédé de stockage selon l'une des revendications 22 à 25,
**caractérisé en ce que**
le compartiment de chargement (6) comprend un partie inférieure (5),
dans lequel la ou au moins une paroi (7) est montée de manière à pivoter de telle sorte que la totalité de la paroi (7) peut pivoter par rapport à la partie inférieure (5),
dans lequel l'actionneur de paroi (9) est relié à la totalité de la paroi pivotante (7) et
dans lequel au moins une étape de réduction de la pression (P) appliquée comprend l'étape dans laquelle l'actionneur de paroi (9) exécute ou autorise un mouvement pivotant de la totalité de la paroi pivotante (7) de telle sorte que le volume du compartiment de chargement (6) augmente,
réduisant ainsi la pression (P) appliquée,
en fonction de la ou d'au moins une propriété de matériau de récolte mesurée.

27. Procédé de stockage selon l'une des revendications 22 à 26,
**caractérisé en ce que**
le véhicule (1) exécute l'étape de réduction automatique de la pression (P) appliquée au moins deux fois,
dans lequel chaque étape de réduction de pression est automatiquement déclenchée en fonction de la ou d'une propriété de matériau de récolte mesurée.

28. Procédé de stockage selon la revendication 27,
**caractérisé en ce que**
la ou au moins une étape de réduction de pression comprend les étapes dans lesquelles
le dispositif d'entraînement de convoyeur (14) est déclenché,
le dispositif d'entraînement de convoyeur (14) déclenché déplace le convoyeur (5), et
le convoyeur (5) déplacé écarte le matériau de récolte (CM) de l'entrée (15) et la ou au moins une autre étape de réduction de pression comprend l'étape dans laquelle
l'actionneur de paroi (9) fait pivoter la paroi (7) ou partie de paroi ou autorise un tel mouvement.
